Europäisches Patentamt

European Patent Office

Office européen des brevets

(19)

(11) Veröffentlichungsnummer: **0 574 868 A2**

(12) **EUROPÄISCHE PATENTANMELDUNG**

(21) Anmeldenummer: **93109509.5**

(22) Anmeldetag: **15.06.93**

(51) Int. Cl.5: **A61C 19/04**, A61C 13/00

(30) Priorität: **17.06.92 DE 4219734**

(43) Veröffentlichungstag der Anmeldung:
**22.12.93 Patentblatt 93/51**

(84) Benannte Vertragsstaaten:
**AT BE CH DE ES FR GB IT LI**

(71) Anmelder: **Arndt, Helge**
**Egestorferstrasse 2**
**D-30989 Gehrden(DE)**

(72) Erfinder: **Arndt, Helge**
**Egestorferstrasse 2**
**D-30989 Gehrden(DE)**

(54) **Apparatur zur Führung eines zahnärztlichen Instrumentes oder eines Messgerätes und Verfahren zur Präparation von Zähnen und zur Herstellung von Restaurationen.**

(57) Die Erfindung betrifft eine Apparatur zur Führung eines substanzabtragenden und/oder substanzaufbringenden zahnärztlichen Instrumentes und/oder zumindest eines Anteils eines Meßgerätes zur geometrischen Form- oder Wegerfassung und ein Verfahren zur zumindest teilweisen maschinellen Herstellung von konservierenden oder prothetischen Restaurationen.

Der Erfindung liegt die Aufgabe zugrunde, ein einfach herstellbares, gut handhabbares zahnärztliches Werkzeug zu schaffen mit dem Zähne im Mund des Patienten durch den Behandler halbindividuell mit minimaler Gefahr und Belastung für den Patienten unter nahezu ideal erfüllten Präparationskriterien beschliffen werden können und sich die entsprechenden Restaurationen zumindest zu einem Teil herstellen lassen.

Die Erfindung besteht bei dem eingangs genannten Gerät aus einer Befestigungsvorrichtung für die Anbringung am menschlichen Körper, dem zu führenden, durch den Behandler bewegbaren Funktionselement und einer Führungsvorrichtung, die beide verbindet, deren Bewegung gegeneinander ermöglicht und gleichzeitig in festgelegten Freiheitsgraden einschränkt, wobei die Befestigungsvorrichtung zur Anbringung am maxillären (Fig.) oder am mandibulären Gebißanteil aus mindestens zwei miteinander verspannbaren Gestellen ([11,14,15] und [17]) besteht, die insgesamt mindestens vier, vorzugsweise jedoch nicht weniger als sechs räumlich voneinander getrennte Auflagepunkte (1-9) am menschlichen Körper aufweisen und der Hauptspannkraftvektor (20) vorzugsweise eher senkrecht zur Okklusionsebene verläuft.

Fig. 1

EP 0 574 868 A2

Verfahren zur halbindividuellen Präparation von Zähnen, des Kieferknochens oder von im Gebiß getragenen oder befestigten prothetischen Restaurationen

und/oder zur zumindest teilweisen maschinellen Herstellung von konservierenden oder prothetischen Restaurationen.

Die Erfindung betrifft

- eine Apparatur nach den Oberbegriff des Anspruchs 1
- ein Verfahren nach dem Oberbegriff des Anspruchs 17.

Die Sanierung eines Gebisses mit Einlagefüllungen, Kronen und Brücken stellt ein sehr zeit- und kostenintensives Geschehen dar. Mit Zunahme der angestrebten prothetischen Versorgungsqualität, steigt der Arbeitsaufwand, besonders im Hinblick auf die Rand- und Kauflächengestaltung überproportional an.

Ursachen hierfür sind im wesentlichen, in der aufwendigeren Präparation der Zähne, ihrer fehlerquellenreichen Abformung und Herstellung im Guß- oder Keramikaufbrennverfahren zu sehen.

Zu den wichtigsten Präparationskriterien zählen:

- geringe Konizität/Divergenz der Stumpf-/Kavitätenwände
- minimaler Substanzabtrag bei ausreichender Platzschaffung für das Kronen- Füllungsmaterial
- scharfer Übergang an der Präparationsgrenze
- glatte Oberfläche zumindest im Randbereich
- möglichst geringes thermisches Trauma durch das Beschleifen.
- Pfeilerparallelität

Bislang können diese Kriterien annähernd nur durch das Geschick des geübten und konzentrierten Behandlers bei erhöhtem Zeitaufwand erfüllt werden.

Abgesehen von speziell geformten Schleifinstrumenten und eindimensionalen Führungs- oder Positionierungsvorrichtungen aus dem Bereich der Implantologie, sind in der Zahnheilkunde bisher keine geeigneten apparativen Präparationshilfen bekannt.

In den Veröffentlichungen DE 92 01 940 U1 und DE 37 30 055 A1 sind Präparationshilfen für die Implantologie bekannt geworden, mit denen sich Fräsungen für Blattimplantate und Zylinderimplantate mittels Führungsvorrichtungen optimiert durchführen lassen. Die Befestigung dieser Apparaturen findet dabei über schon inkorporierte Implantate oder Befestigungsbohrungen in den Kieferknochen statt. Schon allein die Art der Befestigung am menschlichen Körper machen diese Vorrichtungen für die Präparation von Zähnen aufgrund der Invasivität und zu geringen Festigkeit ungeeignet, auch wenn sie entsprechend dimensioniert und gestaltet würden.

In der Patentschrift DE 3203937 C2 ist ein Verfahren und Gerät zur ausschließlich maschinellen Präparation von Zähnen im Mund des Patienten ohne jegliche direkte Führung durch den Behandler angegeben. Die noch unbeschliffenen Zähne werden vorab in ihrer Gestalt durch räumliche Abtastung erfaßt. Die hiermit gewonnenen Werte dienen einerseits der Präparationsplanung, andererseits der Erstellung der späteren Kontur der prothetischen Versorgung. Nach Berechnung der einer idealen Präparation entsprechenden Schleifbewegungen, werden die Zähne mittels einer am Fundament des Behandlungsstuhls befestigten, mit einem Turbinenkopf versehenen Schleifmaschine beschliffen. Der Patientenkopf ist dabei über einen weiteren am Fundament des Behandlungsstuhls angeordneten Ausleger mit Kopfrahmen starr befestigt. Nach dem Beschleifen und gleichzeitigem Registrieren der Abtragungswerte wird mittels einer computergesteuerten Fräsmaschine die prothetische Restauration hergestellt, wobei die Kaufläche(n) und die restlichen äußeren Zahnflächen gemäß der erfaßten Ursprungsdaten gestaltet werden.

Zur Abtastung der Zähne oder ihrer Stümpfe wird entweder eine spezielle ausschließlich für das räumliche Vermessen vorgesehene Abtastvorrichtung, die mit dem Patientenkopf fest verbunden ist und durch den Behandler manuell geführt wird, oder die genannte Schleifmaschine selbst, mit gegebenenfalls speziellem auswechselbaren Abtastkopf, eingesetzt. Im letzteren Fall finden die Abtastbewegungen schrittmotorbetrieben durch den Behandler über ein spezielles Bedienungspult elektronisch gesteuert statt.

In diesem Verfahren wird der Kopf und der Unterkiefer des Patienten bei geöffnetem Mund fest am Behandlungsstuhl, oder seinem Fundamentableger fixiert. Nach Angaben des Erfinders, läßt sich eine ausreichende Fixierung des Ober- und Unterkiefers mittels der in der Kopfchirurgie üblichen Rahmen bewerkstelligen.

Dieses abformlose Kronenherstellungsverfahren trägt zwei wesentliche, auch der hier zu beschreibenden Erfindung zugrundeliegenden Vorteile in sich: Das Beschleifen der Zähne findet zumindest teilweise unter Auschaltung der Unzulänglichkeit der menschlichen Hand statt, so daß die Kriterien einer Idealpräparation nahezu vollständig erfüllt werden können. Die während oder nach der Präparation gewonnenen Informationen über den gefertigten Zahnstumpf ermöglichen zumindest zu einem Teil die Herstellung der prothetischen Versorgung.

Wesentliche Nachteile des genannten Verfahrens bestehen zum einem darin, daß der Patient mit seinem Kopf am Behandlungsstuhl oder im Raum bewegungslos eingespannt ist und zum anderen darin, daß ein manuelles Einschreiten des Behandlers während der Präparation in einer dem Zahnarzt ungewohnten Weise bei Planungsänderungen nicht möglich ist und eine Nachkorrektur nur mit erhöhtem Zeitaufwand durchgeführt werden kann. Es besteht zwar die Möglichkeit die Präparation unter Sichtkontakt zu verfolgen und jeder Zeit zu stoppen und sogar per Bedienungspult indirekt manuell durchzuführen, jedoch liegt eine dem Zahnarzt äußerst ungewohnte Arbeitsweise vor und ist bei einem solchen Procedere der Überblick über den Stand der Präparation weitaus schwieriger einzuschätzen, als dies bei der herkömmlichen Behandlungsweise der Fall ist. Eine auf den notwendigsten Substanzabtrag beschränkte Präparation erfordert damit das wiederholte schrittweise Nachschleifen des Stumpfes. Dies wird insbesondere dann problematisch, wenn der Behandler mittels der Steuerknüppel kurvenförmige Verläufe der Präparationsgrenze nachvollziehen muß.

Die feste Einspannung des Patientenkopfes am Behandlungsstuhl oder indirekt an seinem Fundament soll jegliche Abweichungen der Kopfposition relativ zum Behandlungsstuhl und zur Präparationsmaschine sicher verhindern. Diese Bewegungen sind, bei einer klinisch allgemein geforderten Randspaltpräzision von 50 µm, bei dem angegebenen Verfahren nur im Bereich weniger Mikrometer erlaubt! Ungewollte Bewegungen des Patientenkopfes beispielsweise durch Abwehr-, Schluck- oder Hustenreflexe ausgelöst, können hierbei zu starken Schmerzen und Verletzungen führen oder ein zumindest zwischenzeitliches Verrutschen des Kopfes relativ zum Behandlungsgerät verursachen. Besonders ausgeprägt ist diese Problematik beim Arbeiten im Unterkiefer. Weiterhin ist zu berücksichtigen, daß der Patient häufigst, insbesondere während der Präparation verspannt ist, sich die psychische Belastung durch die starre Einspannung seines Kopfes und den sich nähernden behandlerlosen Fräskopf beträchtlich erhöht und daß in der Praxis immer wieder Mißempfindungen [schleifbedingte Vibrationsemfindung; Schmerzen an bestimmten Stellen der Präparation durch lokalen Anästhesienachlaß oder -versagen) während des Beschleifens festzustellen sind. Diese Faktoren können in einer solchen Situation ruckartige Bewegungen unvermeidlich machen.

Das Einschreiten des Behandlers kann bei der maschinellen Präparation durch neuentdeckte Karies bzw. Entmineralisationen, ursprünglich als Karies diagnostizierte Verfärbungen anderer Ätiologie, ungenügende Separation oder furkationsbedingte unvorhergesehene Einziehungen im Bereich der Präparationsgrenze etc. indiziert sein. Berücksichtigt man die Prämisse der modernen Prothetik, den Kronenrand einer Sanierung möglichst weit supragingival zu lokalisieren, wird das abwechselnde Zusammenspiel von Präparation und Planung deutlich. Je größer die durch die Parallelität der Stümpfe gewonnene Friktion wird, desto mehr Bedeutung erlangt diese Grundregel. Ein Wirkungseffekt, der in der genannten Patentschrift und dieser Erfindung nahezu ideal gewährleistet wird.

Ein weiterer Nachteil der genannten Druckschrift besteht darin, daß die Planung der Präparation nahezu vollständig am unbeschliffenen Zahn durchgeführt wird. Nachpräparationen sind aufwendig, zeitraubend und in vivo schwer kontrollierbar oder nachvollziehbar. Die durch Abtastung des zu versorgenden Zahnes ermittelten Informationen, die den einzigen Ausgangspunkt für die Präparationsplanung darstellen, sind häufig unzureichend, weil:

1. die interdentalen Flächen in ihrer Form weder optisch, noch mechanisch detektierbar sind.
2. der vorliegende zu therapierende Zahn in den häufigsten Fällen unter physiologischen, anatomischen und gnatologischen Gesichtspunkten betrachtet, eine mangelhafte Form aufweist.

Damit sind Nachpräparationen vorprogrammiert. Die aufgeführten Nachteile bedingen bei der Präparation von Zähnen nach den Kriterien der modernen Prothetik oder Zahnerhaltung eine vergleichsweise lange Behandlungszeit, bei fest orientiertem Kopf und Unterkiefer, mit der Folge einer hohen psychischen und physischen Belastung des Patienten und eines erhöhten Risikos, daß Fehler durch relative Positionsänderungen zwischen Behandlungsobjekt und Präparationsapparatur auftreten.

Weitere Nachteile der genannten Apparatur werden durch Darlegung der Vorteile der Erfindung später offensichtlich.

Ein weiteres bekanntes abformloses Verfahren beinhaltet die individuelle Fräsung der Krone oder Füllung mittels computergesteuerter Fräs-Schleifmaschine nach stereophotogrammetischer Kavitätenvermessung [siehe CEREC-VERFAHREN].

Faktoren wie: Zahntechniker, Modellherstellung, Gußvorgang und die zweizeitige Behandlung entfallen auch hier; einfachste "Abformung" in vergleichsweise kurzer Zeit; Fehler bei der Präparation und "Videoabformung" können noch vor Kronenherstellung einfachst erkannt und korrigiert werden; keramische Massen sind das Material der Wahl; Füllungen können beliebig oft wiederholt werden, (-> Lang- zeitprovisorien) stehen einem erhöhtem Zeitaufwand für die Feinausarbeitung gegenüber.

Als wesentliche Nachteile dieses Herstellungsverfahrens ist eine weniger präzise, nach gnathologischen Gesichtspunkten unzureichend gestaltete Kaufläche und die vergleichsweise schlechte Randpaßgenauigkeit zu sehen, so daß die Befestigung mit Kunststoffen nach dem Verfahren der Ätztechnik unumgänglich ist. Letzteres setzt wiederum eine durchgehende Schmelzbegrenzung der präparierten Kavität voraus, wodurch eine beträchtliche Indikationseinschränkung gegeben ist. Eine Verbesserung dieses Verfahrens bedarf eines extrem hohen technischen Aufwands bezüglich der Kammera (Auflösung) und Hardware (hohe Anzahl zu speichernder und verarbeitender Werte) sowie einer aufwendigen Software. Desweiteren ist zu berücksichtigen, daß die heute angegebene erreichbare Präzision dieses Sanierungsverfahrens eine möglichst parallele Präparation der Kavitätenwände voraussetzt. Wiederum ein Effekt, der durch die Erfindung nahezu ideal erfüllt werden kann und gleichzeitig eine Grundlage der vorteilhaften Möglichkeiten, das erfindungsgemäße Verfahren und Gerät, mit schon bekannten Techniken und Verfahren zu kombinieren.

In einem neuartigen Verfahren zur halbindividuellen Präparation von Zähnen, des Kieferknochens oder von im Gebiß getragenen oder befestigten prothetischen Restaurationen und/oder zur zumindest teilweisen maschinellen Herstellung von konservierenden oder prothetischen Restaurationen wird bei vorzugsweise nur unwesentlich in seiner Bewegungsfreiheit eingeschränkten Patientenkpof und/oder Unterkiefer das substanzabtragende Instrument, mit festgelegten Freiheitsgraden der Bewegung durch den Behandler geführt, wobei die grungsätzlichen Bewegungen, abgesehen von zuschaltbaren Bewegungsmöglichkeiten, vorzugsweise auf eine Parallelverschiebung im Raum beschränkt sind und/oder ein zu versorgender Zahn nach dem Verfahren der halbindividuellen Präparation bei gleichzeitiger Bewegungsregistrierung des abtragenden Instrumentes beschliffen, werden zumindest die am Restaurationsrand grenzenden unbeschliffenen Zahnflächen halbindividuell geführt abgetastet oder akustisch oder optisch vermessen und wird die Teil- oder Vollrestauration maschinell einphasig aus Vollmaterial oder mehrphasig aus verbundfest miteinander kombinierten Materialien hergestellt.

Zur Durchführung dieses Verfahrens notwendige Apparaturen und Geräte sind bislang nicht, oder nur teilweise bekannt.

In der Technik und Zahntechnik sind Führungsvorrichtungen schon lange bekannt und äußerst vielseitig im Einsatz. Individuell gefräste Geschiebe, Teleskop- und Konuskronen werden mit solchen Geräten hergestellt. Ihr Einsatz zur Präparation von Zähnen im Mund des Patienten ist jedoch nur unzureichend möglich, auch wenn sie in Miniaturausführung und in Form eines zahnärztlichen Instruments gestaltet wären, da eine sichere Befestigung am menschlichen Körper nicht gewährleistet ist.
Vorrichtungen zur Gerätebefestigung am Kauorgan sind in der Zahnheilkunde im Einsatz (unter anderem DE 28 52 764 C2 und DE 33 12 262 C2). So zum Beispiel zur arbiträren oder kinematischen Schanierachsenbestimmung oder zur konventionellen oder computergestützten Pantographie. Hierbei dienen in den meisten Fällen die Zähne, die äußeren Gehörgänge, oftmals aber auch die Schädelkalotte, oder zum Beispiel bei der Mandibularklammer der kaudale Unterkieferrand, der gegen die Zahnreihe oder den zahnlosen Alveolarkamm gespannt wird, als Befestigungspunkte (siehe Bauer/Gutowski, 3. Auflage).

Die aus der oben genannten Druckschrift bekannte Befestigung des Kopfes am Behandlungsstuhl wurde schon erwähnt.
Die genannten und die bisherigen Befestigungsvorrichtungen ermöglichen nur unzureichend eine bewegungsfreie Anbringung am menschlichen Körper.

Die bekannten computergesteuerten Fräs- und Schleifmaschinen (siehe oben) lassen sich für das erfindungsgemäße Verfahren nur bedingt einsetzen, auch wenn sie mit entsprechender elektronischer Steuerung versehen würden.

Es ist insbesondere für das eingangs genannte neue Verfahren zur halbindividuellen Präparation von Zähnen, des Kieferknochens oder von im Gebiß getragenen oder befestigten prothetischen Restaurationen
und/oder zur zumindest teilweisen maschinellen Herstellung von konservierenden oder prothetischen Restaurationen erforderlich, Apparaturen und Geräte zu schaffen, die den speziellen Erfordernissen der zahnärztlichen Behandlung und des zahntechnischen Herstellungsverfahren entsprechen.

Die Erfindung vermeidet die Nachteile des Standes der Technik.

Der Erfindung liegt die Aufgabe zugrunde, ein einfach herstellbares, gut handhabbares zahnärztliches Werkzeug zu schaffen mit dem Zähne im Mund des Patienten durch den Behandler halbindividuell mit minimaler Gefahr und Belastung für den Patienten unter nahezu ideal erfüllten Präparationskriterien beschliffen werden können, und sich ohne weitere erhebliche Maßnahmen am Patienten, die entsprechende Restauration mit hoher Präzision auch in besonders schwierigen Fällen (tiefe und unübersichtliche Präp), bei maximaler Rohstoffauswahl zumindest zu einem Teil herstellen läßt.

Diese Aufgabe wird bei einer gattungsgemäßen Einrichtung durch die kennzeichnenden Merkmale der Ansprüche 1 und 17 gelöst.

Die durch Anspruch 1 gekennzeichnete Apparatur ermöglicht eine halbindividuelle Präparation von Zähnen im Mund des Patienten, ohne diesen zu gefährden oder erheblich zu belasten, unter nahezu ideal erfüllten Präparationskriterien durch den Behandler in einer ihm gewohnten Weise mittels eines - durch eine am menschlichen Körper befestigte Führungsvorrichtung, die die freie Beweglichkeit des Patientenkopfes und der Kiefer gegeneinander nicht oder nur unwesentlich eingeschränkt - in seiner Bewegungsfreiheit speziell eingeschränkten Funktionselementes, dem Schleifinstrument.

Es ist erfindungswesentlich, daß eine jede Bewegung des Funktionselementes relativ zum Behandlungsobjekt (Zahn/ Knochen/ festsitzende prothetische Versorgung in vivo), abgesehen solcher Bewegungen die durch die Führungsvorrichtung ermöglicht werden und hier auch exakt registrierbar sind, verhindert, oder vernachlässigbar klein gehalten wird. Dies wird durch die Befestigungsvorrichtung und ihrer starren Verbindung mit der Führungsvorrichtung und dem Funktionselement gewährleistet. Es ist hierbei von besonderem Vorteil, daß die drei Anteile der Apparatur in unmittelbarer Nähe zueinander angeordnet sind, weil so bei entsprechenden, somit vergleichsweise geringen Materialstärken und damit auch relativ geringem Gewicht der Apparatur etwaige unerwünschte Bewegungen nahezu ausschließlich auf die Befestigungsvorrichtung zurückzuführen wären. Eine extraorale Lokalisation der Führungsvorrichtung ermöglicht hohe Stabilität und Präzision, wie auch die Realisierung großer Weglängen dre Führungen (z.B. 100x100x50mm) Die sichere Befestigung wird weiter unten besprochen. Auf diese Weise können weitere nachteilige Faktoren, die bei dem in der erwähnten Patentschrift angegebenen Verfahren und Gerät vorliegen, in einfachster Weise beseitigt werden:

- Es ist nämlich zu berücksichtigen, daß neben der Befestigung des Kopfes am Behandlungsstuhl etwaige Bewegungen des Behandlungsstuhls oder der Fräs- und Abtastmaschine relativ zum Behandlungsraum (Boden Wände) zu ersteren addiert werden müssen. Diese Problematik ist zwar lösbar, steht aber mit einem hohen technischen Aufwand in Verbindung, insbesondere dann, wenn man bedenkt, daß erstens ein relativ großer Weg ausgehend von der Haltevorrichtung über die Befestigungspunkte am Fundament des Behandlungsstuhls zum Fräsmaschinenkopf besteht, zweitens beide aktive oder passive Bewegungselemente (Sitzposition des Patienten/ Heranführen der Fräsmaschine in die Grundstellung unmittelbar vor dem Patientenmund) aufweisen, drittens beide ein vergleichsweise hohes Gewicht aufweisen und viertens der Behandler oder die absaugende Assistenz oft in direktem Kontakt mit dem Behandlungsstuhl gerät und ohne weiteres ein unbemerktes Verruckeln verursachen kann.
- Damit werden äußerst präzise und für große Kräfte und Entfernungen ausgelegte Geschiebe- und Arretiervorrichtungen notwendig. Gleichzeitig werden die Geräte sehr teuer. Ein weiterer Nachteil besteht in der geringen Mobilität der Vorrichtung, so daß für eine Mehrzimmer-Praxis mehrere Geräte benötigt werden.

Es besteht aber auch die Möglichkeit, die erfindungsgemäße Apparatur indirekt am Patienten zu fixieren, indem die Führungsvorrichtung wie auch die Befestigungsvorrichtung am Behandlungsstuhl, dessen Fundament oder an anderen sicher im Raum befestigten Gegenständen unbeweglich angebracht sind. Dies kann besonders angezeigt sein, wenn kleinere Sanierungen mit kurzer Behandlungszeit vorliegen, oder wenn im Rahmen weitergreifender Anwendungen insbesondere im Bereich der Chirurgie gearbeitet wird,und/oder die Objektstrukturen beweglich oder ohne Probleme fixierbar sind.

Zur gleichmäßig verteilten Aufbringung von Stoffen auf die beschliffenen oder angrenzenden Zahnflächen ist es besonders sinnvoll, wenn gemäß des Anspruchs 1 das Funktionselement ein substanzauftragendes zahnärztliches Instrument darstellt. Durch die den Präparationsbedingungen entsprechende Führung und Gestaltung des Instrumentes wird seine großflächige Anlagerung mit gleichbleibender Entfernung zur Zahnoberfläche erreicht und damit an jedem Punkt der Objektfläche gleiche Auftragungsbedingungen geschaffen (gewährleistet). Vorraussetzungen, die für die Aufbringung von chemisch oder galvanisch erzeugten Metallüberzügen auf den Zähnen als nahezu ideal anzusehen sind.

Vorteilhaft ist es, wenn das Funktionselement zumindest einen Anteil eines Meßgerätes zur geometrischen Wegerfassung darstellt. Hierbei nimmt das Funktionselement die Aufgabe des speziell geformten Abtastinstruments oder des berührungslosen, im A-Scan betriebenen Ultraschall- oder Laserdetektor eines Meßgerätes ein. Die berührungslose Abtastung vereinfacht und präzisiert zudem die Objektvermessung. Besonders vorteilhaft ist es, wenn das Funktionselement neben seiner Funktion als Substanz ab- oder auftragendes Instrument gleichzeitig als "Tastorgan" eines Meßgerätes fungiert, wobei die Wegaufnehmer vorzugsweise in der Führungsvorrichtung angeordnet sind. Auf diesem Wege können alle durch den Behandler durchgeführten Bewegungen zur präparativen Bearbeitung der Zähne in ihrer Gesamtheit durch Anordnung von Wegaufnehmern entsprechend der Bewegungsfreiheitsgrade der Führungsvorrichtung aufgenommen werden. So sind beispielsweise bei einer Drei-Achs-Geschiebe-Anordnug der Führungsvorrichtung schon drei Wegaufnehmer ausreichend. Um die Anzahl der Wegaufnehmer oder Winkelschrittaufnehmer aus Gründen der Einfachheit und Präzision möglichst gering zu halten, kann es besonders vorteilhaft sein, zweckdienliche Erweierun-

gen der Bewegungsfreiheit stufenweise vorzunehmen und dabei die jeweils eingenommene Position digital zu registrieren oder einzugeben (Anspruch 11).

Zweckmäßig kann es sein, wenn das Funktionselement zumindest ein Anteil eines Meßgerätes zur geometrischen Weg- und Formerfassung darstellt. Als Meßverfahren kommen insbesondere bildgebende Verfahren mittels Videotechnik, Holographie, Laser- oder, Ultraschalldetektoren im B-Scan-Betrieb in Mono- oder Stereotechnik. Der wesentliche Vorteil dieser Anordnung besteht darin, daß durch Festlegung bzw. Bekanntsein gewisser Parameter der Weg-Formerfassung, [Lokalisation von Kammera relativ zum Bearbeitungsobjekt; mehrere Aufnahmen von verschiedenen Punkten können genutzt werden] die Möglichkeit der vereinfachten Verarbeitung der durch das bildgebende Verfahren gewonnenen Informationen besteht, wodurch sich eine Präzisierung der Vermessung realisieren läßt. Die berührungslosen Wege der Formerfassung tragen den besonderen Vorteil in sich, daß kräftebedingte Fehler der Vermessung vermieden werden und daß die erforderliche Meßkopfbewegung nur zwei-, eindimensional oder gar durch nur wenige einzunehemende Positionierungen erfolgen muß.

Eine wesentliche Problematik der erfindungsgemäßen Apparatur besteht, wie oben erwähnt in ihrer sicheren und möglichst starren oder bewegungsarmen Befestigung am menschlichen Körper. Diese Aufgabe wird insbesondere durch die kennzeichnenden Merkmale der Ansprüche 1 bis 9, die Ausführungen der Befestigungsvorrichtung angeben, gelöst. Zweckmäßig ist es, daß die Befestigungsvorrichtung zur Anbringung am maxillären oder mandibulären Gebißanteil aus mindestens zwei miteinander verspannbaren Gestellen besteht, die mindestens vier vorzugsweise jedoch nicht weniger als sechs räumlich voneinander getrennte Auflagepunkte am menschlichen Körper aufweisen.

Diese Anordnung der Befestigungsvorrichtung stellt eine apparativ besonders einfache vielseitige und sichere Form der Anbringung am menschlichen Kauorgan dar. Zur Anbringung im mandibulären oder maxillären Gebißanteil unterscheiden sich die Vorrichtungen abgesehen von einzelnen anatomisch bedingten Abmessungen und Lokalisationen der Auflagepunkte grundsätzlich nicht. In beiden Fällen wird die Fixierung der Gestelle über ihre Auflagepunkte durch die erzeugte einanderzugewandte, schraubzwingenartige, den Unterkieferkörper bzw. Oberkiefer-Schädel-Komplex einschließende Kraftwirkung gewährleistet. Dabei ist es erfindungswesentlich, daß das von den Auflagepunkten der Gestelle eingenommene anatomische Korrelat, d.h. der Unterkiefer bzw. Oberkiefer-Schädel-Komplex, keine gelenkigen Teilungen aufweist. Nur unter diesem Gesichtspunkt kann es gelingen die maximale relative Bewegung der Apparatur zu den Objektstrukturen im Bereich weniger Mikrometer zu beschränken.

Vorteilhaft ist es, wenn der Summenvektor der Kraft zur Verspannung beider Gestelle die Kauebene möglichst eher senkrecht kreuzt, die Auflagepunkte eines jeweiligen Gestells möglichst große Abstände voneinander aufweisen und die auf eine senkrecht zum Spannkraftvektor ausgerichtete Ebene projizierten Auflagepunkte einer Befestigungsvorrichtung, wie auch die eines jeden Gestells eine möglichst große Fläche einnehmen und der Schwerpunkt der projizierten Flächen eines Gestells zumindest innerhalb der Fläche des antagonistischen Gestells zu liegen kommt.

Es besteht aber auch die Möglichkeit, daß der Summenvektor der Kraft zur Verspannung der Gestelle eher parallel zur Kauebene verläuft und sagital oder transversal ausgerichtet ist. Dies kommt insbesondere für die Anbringung im maxillären Gebißanteil in Betracht und trägt den Vorteil einer ausschließlich extraoralen Befestigungsmöglichkeit in sich.

Die notwendige Verspannungskraft zur sicheren Befestigung muß für die Anbringung einer jeweiligen Apparatur zweckmäßigerweise mindestens so groß sein, daß die unerwünschte Bewegung der Befestigungsvorrichtung relativ zum Behandlungsobjekt (den Zähnen/ Knochen/Prothesen) einen festgelegten Toleranzbereich nicht überschreitet. Der Referenzpunkt zur Messung der relativen Bewegung ist dabei sinnvollerweise im Bereich des Funktionselementes lokalisiert.

Verursacht werden diese Bewegungen einerseits durch den Behandler, in Form der zur Bewegung des Funktionselementes notwendigen und unvermeidlichen Krafteinwirkung und der Unzulänglichkeit der menschlichen Hand (->Kipp- und Torsionskräfte), andererseits durch nur bedingt vermeidbare Bewegungen des Patienten (Abwehrreflex, Schluckreflex, Hustenreflex u.a.).

Es ist zweckmäßig, die Anzahl der Auflagepunkte generell klein zu halten, um eine Ausrichtung eines jeweiligen Gestelles auch während der verspannenden Kraftbeaufschlagung zu ermöglichen und damit verkeilende Kräfte zwischen den Gestellen zu verhindern und annähernd gleichgroße Kraftwirkung an jedem Auflagepunkt zu gewährleisten. (siehe auch Anspruch 6)

Vier Auflagepunkte am menschlichen Körper stellen das Minimum dar und tragen den Vorteil einer besonders einfachen Applizierbarkeit und Ausführung der Befestigungsvorrichtung bei großer Adaptionsbreite an die anatomische Form- und Größenvariabilität (eine Apparatur für viele Fälle) und eines größeren intraoralen Platzangebotes. Nach den oben genannten Kriterien kreuzen sich die Verbindungslinien der Auflagepunkte eines jeden Gestells vorzugsweise annähernd senkrecht in ihrer Projektion.

In diesem Fall besteht aber auch die vorteilhafte Möglichkeit, beispielsweise im Oberkiefer ein Gestell mit mindestens drei Auflagepunkten und das antagonistische Gestell mit nur einem Auflagepunkt auszustatten.

Besonders sinnvoll kann es sein, jedem Gestell drei Auflagepunkte mit hauptsächlich parallel zum Spannkraftvektor ausgerichteter Kraftwirkung, zuzuordnen, so daß eine Befestigungsvorrichtung vorzugsweise nicht weniger als sechs Auflagepunkte aufweist, wobei die Spitzen der projizierten Flächen beider Gestelle jeweils in die entgegengesetzte Richtung weisen sollten. Somit wird jedes Gestell für sich schon ausschließlich durch die Verspannung kippungsfrei fixiert. Auf diese Weise kann eine besonders sichere und einfache Befestigung und Handhabung gewährleistet werden. Eine erhöhte Anzahl von Auflagepunkten trägt weiterhin den Vorteil der Verringerung der notwendigen Kraftbeaufschlagung je Auflagepunkt in sich.

Vorteilhaft kann es sein, wenn eine Befestigungsvorrichtung neben den besprochenen Auflagepunkten mit hauptsächlich parallel zum Spannkraftrichtungsvektor ausgerichteter Kraftwirkung (Abstützpunkt) weitere Auflagepunkte mit hauptsächlich senkrecht zum Spannkraftrichtungsvektor ausgerichteter Kraftwirkung (Fixpunkt) aufweist. Dies ist insbesondere dann zweckmäßig, wenn bevorzugte Abstütz-Auflagepunkte bei ihrer Verspannung horizontale Kraftkomponenten verursachen, oder wenn horizontale Fixierungsmomente einer Befestigungsvorrichtung nicht oder nur unzureichend vorhanden sind. Beispiele sind im Bereich der Trigona retromolaria, ventrokranialen Kinnpartie, des harten Gaumens oder des kaudalen Unterkieferkörperrandes zu sehen.

In den Ansprüchen drei und vier wird dies berücksichtigt.

Besonders vorteilhafte Wirkungseffekte der Vorrichtung bestehen unter anderem darin, daß:

- durch die weit voneinder entfernten Auflagepunkte schon bei vergleichsweise geringen Verspannungskräften die relative Bewegung der Vorrichtung zum Körper bei Applikation exentrischer Kräfte vernachlässigbar klein wird,
- aufgrund der anatomischen Gegebenheiten mit Kraftbeaufschlagung auf die Gestelle neben hauptsächlich vertikalen auch horizontale Kraftkomponenten auftreten, die im Zusammenwirken eine besonders effektive Fixierung am Körper gewährleisten,
- die Komprimierbarkeit und Verschieblichkeit der Weichgewebe gegen ihre knöcherne Unterlage, wie auch die horizontale und vertikale Beweglichkeit der Zähne die bewegungsarme Befestigung der Apparatur nicht wesentlich einschränkt, da das Resilienzverhalten der Gewebe schon nach relativ kurzer Belastungszeit vernachlässigbar klein ist und sich durch zwischenzeitliches Nachspannen der Gestelle kompensieren läßt. Dieses Nachspannen darf jedoch nicht innerhalb des Bearbeitungsvorganges eines Zahnes stattfinden.
- der Patient seinen Kopf wie auch seinen Unterkiefer nahezu uneingeschränkt bewegen kann und auch innerhalb des Bearbeitungsvorganges eines Zahnes einen Mundschluß beispielsweise beim Schlucken oder eine Positionsänderung auf dem Behandlungsstuhl ohne weiters durchführen kann.

Die in Anspruch 2 gekennzeichneten Merkmale zeigen geeignete Auflagepunkte der Befestigungsvorrichtungen auf. Dabei ist es zweckmäßig, daß ein für die Auflagerung vorgesehener Bereich am menschlichen Körper eine knöcherne Unterlage mit möglichst wenig Muskeln und Gefäße enthält, eine geringe Verschieblichkeit der Haut gegen die Knochenunterlage und ein geringes Resilienzverhalten vorliegt. Weiter-hin ist eine geringe Druckempfindlichkeit des Areals insbesondere an den extraoralen Auflagepunkten von Vorteil, weil so auf selten vom Zahnarzt eingesetzte Anästhesien verzichtet werden kann.

Besonders vorteilhaft für die Anbringung der Befestigungsvorrichtung im mandibulären Gebißanteil ist es, wenn ein Gestell mindestens je einen Auflagepunkt auf den Trigona retromolaria oder deren angrenzenden Alveolarkammabschnitten, mindestens einen Auflagepunkt im Bereich der ventrokranialen Kinnpartie und mindestens einen Auflagepunkt im Bereich der lingualen Fläche der Unterkieferfrontzähne und/oder ihres Alveolarknochens aufweist und ein zweites Gestell mindestens sechs, vorzugsweise nicht weniger als acht Auflagepunkte im Bereich des kaudalen Unterkieferkörperrandes aufweist. Hierbei ist es zweckmäßig, daß sich jeweils mindestens je drei, vorzugsweise vier Auflagepunkte auf der Innenseite und Außenseite des kaudalen Mandibularandes befinden, die vorzugsweise einander gegenüberliegend angeordnet sind (Anspruch 3). In ihrer Gesamtheit fungiert ein jeder der drei beziehungsweise vier Doppelauflagerungspunkte für sich als Abstütz- und Fixpunkt.

Durch diese Anordnung bringt eine senkrecht zur Kauebene gerichtete Verspannungskraft ein jedes Gestell für sich in eine horizontal und vertikal fixierte Position und gewährleistet eine sichere Befestigung der Apparatur. Die weit voneinander entfernten Auflagepunkte unterstützen den Wirkungseffekt. Die Belastungspunkte im Bereich der Trigona, beziehungsweise des Alveolarkamms und der ventrokranialen Kinnpartie fungieren dabei als Abstützpunkte, die linguale Unterkieferfrontfläche als horizontale Fixierungspunkte zur Kompensation der nach anterior gerichteten Kraftkomponente.

Vorteilhaft kann es auch sein, die Auflagepunkte teilweise in Form iatrogener Nadeln oder Dornen zu gestalten, die für einen direkten Kontakt mit der knöchernen Unterlage des Auflagegebietes vorgesehen sind (Anspruch 9). Ein jeder solcher Punkt trägt die Funktionen eines Abstütz- und Fixpunktes in sich und zeigt zudem kein Resilienzverhalten. Deswegen kann es zweckmäßig sein, wenn das intraorale Gestell mindestens je ein Auflagepunkt im Bereich der Trigona retromolaria beziehungsweise der angrenzenden Alveolarkammabschnitte und mindestens einen Auflagepunkt im Bereich der ventrokranialen Kinnpartie aufweist, wobei zumindest die beiden erstgenannten Punkte mit Dornen versehen sind. Wird der ventrale Auflagepunkt ebenfalls mit einem Dorn versehen, ist ein intraoraler Zugang, über das Vestibulum vorzuziehen. Bei dieser Ausführungsform entfällt der linguale Anteil der Befestigungsvorrichtung, so daß der Zungenraum nicht eingeschränkt wird.

Beide genannten Ausführungen tragen weiterhin den wesentlichen Vorteil in sich, daß der Pa- tient alle Artikulationsbewegungen und Okklusions- positionen einnehmen kann.

Besonders einfach und für den Patienten wenig belastend ist es, wenn das intraorale Gestell mindestens drei, vorzugsweise vier Auflagepunkte auf den Zähnen mit möglichst großem Abstand voneinander aufweist (Anspruch 3). Mittels eines thermo- oder chemoplastischen Materials fungiert auch hier jede Auflage als Abstütz- und Fixpunkt gleichzeitig. Aufgrund der geringen parodontalen Wertigkeit der Frontzähne ist es sinnvoll mehrere Frontzähne in einem Auflagepunkt zusammenzufassen.

Die Wahl der Auflagepunkte ist unter Freilassung der Objektzähne zweckmäßigerweise so zu gestalten, daß die von ihnen eingenommene Fläche möglichst groß ist und so eine maximale Kippmeiderfunktion in sagitaler und transversaler Richtung gewährleistet wird. Weiterhin kann es sehr zweckmäßig sein, Auflagepunkte auf den Zähnen mit weichteilgestützten oder über Dornen in direktem Knochenkontakt befindlichen Punkten zu kombinieren. Dies ist insbesondere im Lückengebiß und Freiendfällen und bei Versorgung endständiger Zähne indiziert. Ebenso können auch in Infraokklusion befindliche Zähne - z.B. im Durchbruch be- findliche Weisheitszähne; zur Extraktion vorgesehe- ne Zähne, gegebenenfalls nach Kaufflächenabtra- gung - oder Zähne ohne Antagonistenkontakt als Auflagepunkte eingesetzt werden, die die Artikulation und Okklusion vorzugsweise nicht behindern.

Vorteilhaft für die Anbringung im maxillären Gebißanteil ist es, wenn die Befestigungsvorrichtung mindestens einen Auflagepunkt unmittelbar kaudal und zwei kranial der Protuberantia externa des Hinterhauptbeins (Inion), mindestens zwei Auflagepunkte im Bereich des Stirnbeins oberhalb des Arcus superciliaris und/oder im Bereich der knöchernen Nasenwurzel und mindestens drei vorzugsweise nicht weniger als vier Auflagepunkte im Bereich der nach kraniolateral weisenden Flächen der Schädelkalotte und/oder der Stirn aufweist. Zweckmäßig ist es, hierbei zur Herstellung eines kraftschlüssigen Kontaktes aller Auflagepunkte mit den anatomischen Strukturen, zumindest an einzelnen Auflagepunkten je eine Spannvorrichtung anzubringen.

Diese Ausführung einer Befestigungsvorrichtung ermöglicht eine auschließlich extraoral lokalisierte Appliklation am menschlichen Körper. Die Orientierung des Spannkraftvektors kann dabei sagital, transversal oder vertikal eingeordnet werden.

Eine besonders sichere Befestigung im maxillären Gebißanteil wird gewährleistet, wenn die zuvor genannte Ausführungsform ein weiteres Gestell mit mindestens:

- einen Auflagepunkt am harten Gaumen oder
- einen Auflagepunkt am harten Gaumen und vorzugsweise nicht weniger als zwei Auflagepunkte im Bereich der vestibulären Flächen der Oberkieferfrontzähne und/oder ihres Alveolarknochens oder
- je einen Auflagepunkt im Bereich der Tubera oder deren angrenzenden Alveolarkammabschnitten und vorzugsweise nicht weniger als zwei Auflagepunkte im Bereich der vestibulären Flächen der Oberkieferfrontzähne und/oder ihres Alveolarknochens oder
- je einen Auflagepunkt im Bereich der nach kaudal geneigten Flächen in den Regionen der Processus zygomatici (maxillae) und vorzugsweise nicht weniger als zwei Auflagepunkte im Bereich der vestibulären Flächen der Oberkieferfrontzähne und/oder ihres Alveolarknochens oder
- drei vorzugsweise vier Auflagepunkte auf den Zähnen und /oder im Bereich des zahnlosen Alveolarkamms mit möglichst großen Abstand voneinander.

Der Spannkraftvektor zwischen den beiden Gestellen ist bei diesen Ausführungen anäherend senkrecht zur Okklusionsebene ausgerichtet und kann sogar nach vorne-oben geneigt werden.

Damit läßt sich die im Oberkiefer-Schädelkomplex, insofern vorliegende Problematik in einfacher und zuverlässiger Weise lösen, als der Flächenschwerpunkt der Oberkiefer-Zahnreihe in seiner Projektion senkrecht zur Okklusionsebene im Bereich der Stirn zu liegen kommt und somit eine direkte Verspannung der Gestelle mit senkrecht zur Okklu- sionsebene verlaufenden Spannkraftvektor nicht di-

rekt möglich ist. So trägt ein stark nach dorsal geneigter Spannkraftvektor den Nachteil in sich, daß die Kraftbeaufschlagung zu einer nach dorsal gerichteten Kraftwirkung, verursacht durch die Neigung des Gaumens oder der Tubera führt, so daß diese durch einen weiteren Auflagepunkt, beispielsweise im Bereich der vestibulären Flächen der oberen Frontzähne kompensiert werden muß. Nachteilig ist dabei, daß an diesen Flächen je nach Vektorneigung vergleichsweise hohe Kräfte zur Gewährleistung einer sicheren Befestigung auftreten. Bei der genannten Befestigungsvorrichtung wird zur Erzielung der kranialgerichteten Abstützwirkung neben den intraoralen Auflagepunkten zusätzlich die Protuberantia externa des Hinterhauptbeins genutzt.

Eine besonders einfache, sichere, wenig Platz einnehmende Gestaltung eines intraoralen Gestells einer Befestigungsvorrichtung ist im kennzeichnenden Merkmal des Anspruchs 4 aufgeführt. Derart lassen sich die Auflagepunkte in den genannten Regionen wie beispielsweise Trigona, Tubera, Gaumen etc. realisieren.

In Anspruch 5 wird eine zur Verspannung der Gestelle dienende Hubvorrichtung erwähnt. Die Kraftbeaufschlagung mittels Schraubwirkung läßt sich apparativ besonders einfach realisieren und trägt den Vorteil einer äußerst präzisen Kraftdosierung bei der Anbringung der Apparatur in sich. Weiterhin kann es zweckmäßig sein, den manuell bedienbaren Schraubkopf der Hand des Patienten zugänglich anzuordnen. Der Patient kann dann selbst die erträgliche Spannkraft einstellen, korrigieren und nachstellen [Abwarten der anfänglich hohen Resilienz; Angstminderung durch Selbstkontrolle].

Besonders wirkungsvoll kann es sein, wenn die Gestelle einer Befestigungsvorrichtung nur einen kraftschlüssigen Berührungspunkt miteinander aufweisen (Anspruch 6), da so eine uneingeschränkte Ausrichtung der Gestelle zueinander bei ihrer Verspannung gewährleistet wird. Dieser Wirkungseffekt ist beispielsweise besonders bei den im Anspruch 3 angegebenen Vorrichtungen zur Befestigung im Unterkiefer vorteilhaft. Hier wird jedes Gestell für sich durch eine senkrecht zur Okklusionsebene ausgerichtete Kraftbeaufschlagung in seine jeweilige Position gebracht, die durch die Verspannung unbeeinflußt bleibt.

Zweckmäßig kann es aber auch sein, die Ausrichtung der Gestelle zueinander nur eingeschränkt zuzulassen, beispielsweise durch Anordnung von zwei oder drei Berührungspunkten. Hierdurch läßt sich auch eine gezielte Kraftaufbringung auf verschiedene Auflagepunkte realisieren (Anspruch 6).

Eine maximale Einschränkung der Ausrichtung der Gestelle zueinander wird erreicht, wenn die Gestelle durch ein spannbares Geschiebe miteinander verbunden sind. Die Bewegungsachse dieses Geschiebes verläuft parallel zum Spannkraftvektor. Diese Ausführungsform ist besonders dann notwendig, wenn eines der zu verspannenden Gestelle durch seine Auflagepunkte nicht sicher - beispielsweise zu geringe Kippmeiderfunktion - in einer Possition gehalten werden kann. Dies ist bei der Befestigung im maxillären Gebißanteil mit Auflagepunkten am Gaumen und/oder vestibulären Flächen der Frontzahnregion vorteilhaft.

Zweckmäßig ist es, wenn ein Getsell einer Befestigungsvorrichtung aus mehreren Teilen zusammengesetzt ist und mindestens ein Gelenk zur rotierbaren und/oder verschiebbaren Positionsänderung mit Arretierbarkeit, vorzugsweise durch Klemm- oder Schraubwirkung, aufweist (Anspruch 7). Auf diese Weise läßt sich mit nur wenigen Gestellgrößen die anatomische Varriationsbreite des menschlichen Schädels erfassen. Es kann aber auch sinnvoll sein, eine gelenkige Verbindung ohne Arretierbarkeit innerhalb eines Gestells anzuordnen. Eine solche Anordnung ist dann vorteilhaft, wenn ein Gestell vergleichsweise viele Auflagepunkte beispielsweise zur gleichmäßigen Druckverteilung aufweist. So können vorzugsweise zwei oder drei Auflagepunkte an einer Stelle ("Auflagepunkt") über ein Schanier- bzw. Kugelgelenk mit dem Gestellrahmen verbunden werden, wobei die Bewegungslosigkeit in diesem Gelenk nach Applikation der Apparatur durch die Verspannung selbst gewährleistet wird. Zusätzlich kann ein solches Gestell nach der endgültigen Verspannung arretiert werden.

In den kennzeichneneden Merkmalen des Anspruchs 9 sind Möglichkeiten angegeben, die die individuelle Anpassung der Auflagepunkte an ihr jeweiliges Tegument verbessern. Die hierdurch erzielten Vorteile liegen im wesentlichen in einer gleichmäßigen Kraftverteilung, aus der eine Minderung der Druckbelastung folgt, in einer verbesserten Fixierung an den Körperstellen und in der Möglichkeit bei vergleichsweise geringem apparativen Aufwand, eine optimale Anpasssung an die individuellen Gegebenheiten zu realisieren.

Besonders vorteilhaft kann es sein, die Anpassung erst nach einer initialen Verspannung der Gestelle, mittels unter Druck zugeführten chemoplastischen Materials, in einen vorgesehenen verformbaren Hohlkörper zu bewerkstelligen. Resilienzbedingte Formänderungen im Bereich der Auflagefläche können eliminiert werden.

Der Einsatz elastischer Materialien gewährleistet im eingeschränkten Maße einen ähnlichen Effekt. Die Schichtdicke eines solchen vorzugsweise relativ starren Elastomeres sollte jedoch begrenzt sein, um nicht eine übermäßige sich addierende künstliche Resilienz zu produzieren und damit einer sicheren bewegungsarmen Befestigung entgegen-zuwirken. Deswegen kann es besonders vorteilhaft sein, eine solche individuelle Anpassung zweiphasig mit proximal (zum Gestell) starren, distal (zur Auflageoberfläche) elastischen Chemo- oder Thermoplasten vorzunehmen. Die Wirkungseffekte der dornen- oder nadelförmigen Auflagepunkte wurden schon oben erwähnt. An dieser Stelle soll nochmals auf die Möglichkeit hingewiesen werden, einen Auflagepunkt mit seinem Gestell gelenkig zu verbinden. So kann beispielsweise ein solcher "Punkt" in Gestalt zweier oder dreier Dornen für den direkten Knochenkontakt (nach Schleimhautperforation) angeordnet sein, der über Scharnier- bzw. Kugelgelenk mit dem Gestell verbunden ist. Auf diese Weise kann ein eventueller Einbruch der Kompakta durch günstigere Kraftverteilung verhindert werden. Vorteilhaft kann es auch sein, verschiedene Arten der Auflagepunkte zu kombinieren. Dornenartige Auflagepunkte können mit chemoplastisch unterlegten Punkten besonders wirkungsvoll kombiniert werden. Vorteilhaft kann es dabei sein, den Dorn im Zentrum der Auflagefläche zu lokalisieren und derart anzuordnen, daß seine Applikation auf die Knochenoberfläche beispielsweise durch Schraubwirkung nach erfolgter Anbringung in vivo erfolgen kann.

Sinnvoll ist es, wenn der intraorale Anteil eines Gestells zur Anbringung am mandibulären Gebißanteil im sublingualen und/oder bukkalen (fornixnahen) Seitenzahnbereich, zur Anbringung im maxillären Gebißanteil im bukkalen (fornixnahen) Seiten- und/oder Frontzahnbereich mit für den Speichel durchlässigen Überzug versehene offene oder perforierte Absaugschläuche aufweist.

Hiermit läßt bei nur minimalen Platzbedarf die Problematik der Absaugung, die im erfindungsgemäßen Vorgehen verstärkt vorliegt, verbessern.

Besonders zweckmäßig ist es, die physiologische Beweglichkeit der Objektzähne zu unterbinden (Anspruch 8). Dies kann einerseits durch Applikation chemo- oder thermoplastischer Materialien unterhalb der geplanten Präparationsgrenze und andererseits in besonders vorteilhafter Weise durch an der Befestigungsvorrichtung angebrachte Fixier- oder Immobilisationsstifte, die am Objektzahn unterhalb der Präparationsgrenze greifen, ermöglicht werden. Ebenso kann eine alleinige oder unterszützende Stabilisierung durch die Verwendung von Interdentalkeilchen realisiert werden.

Die Führungsvorrichtung stellt das Bindeglied des Funktionselementes zur Befestigungsvorrichtung dar und bestimmt die Freiheitsgrade seiner Bewegungen. Es ist sinnvoll die Bewegungsfreiheit des Funktionselementes grundsätzlich derart zu wählen, daß zumindest seine uneingeschränkte Parallelverschiebung im dreidimensionalen Raum relativ zu den Objektzähnen möglich ist. Erweiterungen und Einschränkungen dieser Bewegungsfreiheit sind anwendungsbedingt sehr sinnvoll und lassen sich vorteilhafterweise durch zusätzliche apparative Austattungen realisieren (Anspruch 11).

Eine solche Führung des Funktionselementes läßt sich in einfacher Weise einerseits mittels Scharniergelenken, andererseits mittels Geschieben (Anspruch 10) realisieren.

Vorteilhaft kann es sein, die Führungsvorrichtung aus mindestens zwei in einem Mindestabstand voneinander entfernten Schaniergelenken mit parallelen Rotationsachsen und mindestens einem parallel zu den Rotationsachsen angeordneten linearen Führungsschlitten zusammengesetzt ist, der vorzugsweise das Funktionselement trägt.

Diese Ausführungsform eignet sich in besonderer Weise für die halbindividuelle Präparation, da sie einfach zu handhaben ist, eine geringe initiale Widerstandskraft und vergleichsweise große Bewegungsfreiheit aufweist.

Eine besonders exakte, verwindungssteife und sichere Führung läßt sich mit vergleichsweise einfachen technischem Aufwand durch die in Anspruch 16 gekennzeichnete Anordnung realisieren. Sie stellt ein Drei-Achsengeschiebe dar und trägt den Vorteil der beträchtlichen funktionellen Erweiterungsmöglichkeiten in sich, die weiter unten noch besprochen werden.

Zweckmäßig ist es, daß die Verbindung der Führungsvorrichtung mit der Befestigungsvorrichtung starr arretierbare Gelenke und/oder Geschiebe aufweist, um die Positionierung und Orientierung der Führungsvorrichtung bzw. des Funktionselementes relativ zum Behandlungsobjekt, d.h. zum Zahn, Kieferknochen oder Zahnersatz dem individuellen Patientenfall entsprechend gewährleisten zu können (Anspruch 11).

Besonders zweckmäßig kann es sein, wenn die Verbindung des Funktionselementes mit der Führungsvorrichtung stufenlose oder stufenförmige arretierbare Gelenke und/oder Geschiebe aufweist (Anspruch 11). Es kann dabei von besonderem Vorteil sein, wenn Gelenk- oder Geschiebeverbindungen Freiheitsgrade der Bewegung aufweisen, die von denen der Führungsvorrichtung nicht abweichen. Auf diese Weise läßt sich die Weite des Arbeitsbereiches vergrößern oder die zahnärztliche Behandlung vereinfachen, ohne die Position der Führungsvorrichtung verändern zu müssen. Dies ist beispielsweise sinnvoll, wenn anatomische Strukturen die Bewegung des Funktionselementes behindern, so beim Wechseln des Behandlungsobjektes vom rechten zum linken Quadranten in einem Kiefer (anatomischen Struktur ist in diesem Fall die linke Wange), oder wenn die maximale Bewegungsfreiheit des Funktionselementes zu klein ist, um mehrere weit voneinander entfernte Behandlungsobjekte einer prothetischen Versorgung ( eine gemeinsame Einschubrichtung ) bearbeiten zu können. Um die hierbei eintretende Positionsänderung registrieren zu können, ist es zweckmäßig die Bewegung mittels Wegaufnehmern zu registrieren. Da die Bewegungen jedoch den Freiheitsgraden der Führungsvorrichtung entsprechen, ist es auch möglich, diese Bewegung über einen beliebig gewählten Fixpunkt nachzuvollziehen.

Eine weitere einfache und vorteilhafte Ausführung besteht im Einsatz stufenförmiger Arretierungen, deren Positionsänderungen dann dem Behandler bzw. dem Rechner bekannt, detektierbar sind oder eingegeben werden.

Selbstverständlich ist es auch möglich, die besprochene Gelenkverbindung zwischen Führungsvorrichtung und Funktionselement anzuordnen (Anspruch 11).

Es kann dabei aber auch von besonderem Vorteil sein, wenn mindestens eine Gelenk- oder Geschiebeverbindung Freiheitsgrade der Bewegung aufweist, die denen der Führungsvorrichtung nicht gleicht und somit die Anzahl der Freiheitsgrade der Bewegung des Funktionselementes relativ zum Behandlungsobjekt erhöht (Anspruch 11).

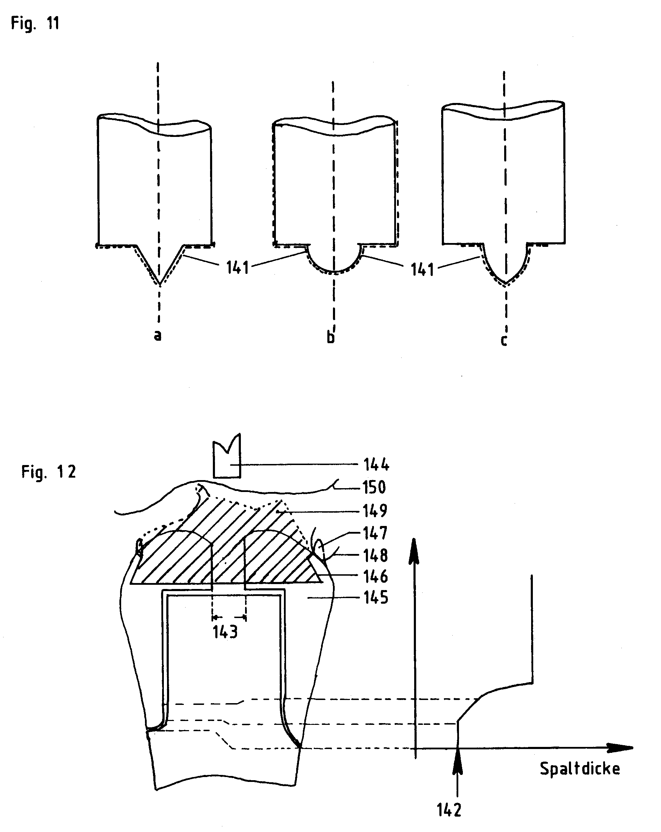

Eine besonders wirkungsvolle Positionsänderung des Funktionselementes stellt die Schwenkung des grundsätzlich parallel zur Präparationsachse ausgerichteten Schleifkörpers durch Rotation um eine senkrecht zur Präparationsachse angeordnete Achse dar. Von großer Relevanz ist dies beispielsweise, wenn bei dem Beschleifen von Zähnen aufgrund der anatomischen Form, präparativ Flächen zu gestalten sind, die die Achse der Einschubrichtung in vergleichsweise großem Winkel kreuzen (Okklusalfläche, vestibulären Flächen z.B. Kronenflucht, vestibuläre Krümmung der Frontzähne, Abschrägungen zwecks Entgratung etc). So können sämtliche Zahnflächen eines Zahnes sogar ohne Bohrerwechsel beschliffen werden, wodurch die Vorgehensweise besonders erleichtert wird und der apparative Aufwand vergleichsweise gering bleibt. Günstig wirkt sich auch die Tatsache aus, daß die so präparierten Abschnitte einer geringeren Präzision bedürfen, da sie nicht zur Bildung der Präparationsgrenze beitragen (Figur 12). Da in den meisten Fällen die Approximalflächen parallelwandig oder gegebenenfalls leicht konisch zu beschleifen sind, dagegen die vestibulären Zahnflächen (Frontzahnästhetik/ Kronenflucht) eine stärkere Neigung der Präparationsflächen zur Zahnachse erfordern, ist es besonders vorteilhaft, wenn die Rotationsachse zusätzlich parallel zur mesio-distalen Achse des zu behandelnden Zahnes ausgerichtet ist.

Auch bei dieser Ausführungsform ist es zweckmäßig die Positionsänderung mittels Wegaufnehmer oder stufenförmig exakt nachvollziehbar zu machen.

Besonders effizient kann auch eine Schwenkung des Funktionselementes um ca 90° sein, wenn zum Beispiel bei der Präparation eines Zahnes zur Aufnahme eines okklusalen Inlays zusätzlich ein cervikales Inlay präpariert werden muß, dessen Einschubrichtung annähren senkrecht zur ersterem verläuft.

Das absolute Ausmaß der Bewegungsfreiheit des Funktionselementes sollte den Bereich von ca. 20 mm je Schlitten nicht unterschreiten, um das Beschleifen eines Zahnes zu ermöglichen, ohne eine Positionsänderung an anderer Stelle innerhalb der Apparatur durchführen zu müssen. Vergleichsweise geringe Bewegungsfreiheit des Funktionselementes trägt den Vorteil in sich, daß die Apparatur einfach, präzise und leichtgewichtig gestaltet werden kann. Präparationen von Brücken erfordern jedoch ein Umpositionieren des Funktionselementes oder der Führungsvorrichtung.

Vorteilhaft ist es, wenn die Beweglichkeit der parallel zur Okklusionsebene ausgerichteten Schlitten im Bereich von 60-100 mm und des zahnachsparallel orientierten Schlittens im Bereich von 30- 60 mm zu liegen kommt. Auf diese Weise kann der gesamte Zahnkranz erreicht werden und sogar das Funktionselement aus der Mundhöhle gefahren werden, so daß der Schlußbiß eingenommen werden kann, ohne eine Umpositionierung durchführen zu müssen. Hierbei entsteht jedoch ein hoher technischer Aufwand und hohe Kosten, weil mit Zunahme des Quotienten aus maximaler Weglänge und Auflösung der Kostenfaktor überproportional ansteigt.

Da jedoch eine Umpositionierung des Funktionselementes relativ zur Befestigungs- oder Führungsvorrichtung oftmals auf Grund anatomischer Gegebenheiten notwendig ist, ist es für bestimmte häufige Sanierungsformen zweckmäßig eine Bewegungsraum von ungefähr 60 X 60 X40 mm zu wählen.

Besonders vorteilhaft ist es gemäß des Anspruchs 12, wenn das Funktionselement für die Anbringung eines zahnärztlich gestalteten Griffes vorgesehen ist. Auf diese Weise wird dem Behandler die Bewegung des Präparationsinstrumentes in einer ihm besonders gewohnten Weise ermöglicht. Um ein Übergreifen der unerwünschten Torsions- und Kippkräfte durch den Behandler auf das Funktionselement zu minimieren, ist es sinnvoll, den Griff beweglich, beispielsweise mittels Kugelgelenk zu befestigen. Vorteilhaft ist es, auch diese Gelenkverbindung mit einer Arretiervorrichtung und Ablösvorrichtung auszustatten, die vorzugsweise am Griff bedienbar ist, um z.B. eine Schwenkung des Funktionselementes oder Entfernung des Griffes leichter und schneller durchführen zu können. Weitere Ausstattungen des Griffes werden weiter unten beschrieben.

Zweckmäßig ist es, die Bewegungselemente der Führungsvorrichtung möglichst reibungsarm mit minimalem Bewegungsspiel z.B. kugelgelagert, verformungsstabil aber auch leichtgewichtig zu gestalten.

Die leichte Beweglichkeit des Funktionselementes nimmt einen hohen Stellenwert ein, um dem Zahnarzt eine ihm gewohnte Arbeitsweise gewährleisten zu können. Die Präparation von Zähnen wird neben der direkten Sicht im wesentlichen durch den Tastsinn des Behandlers geprägt. Überraschenderweise findet die Führung des Präparationsinstrumentes jedoch mit einer relativ großen Kraft statt. Dennoch würde ein schon relativ geringer zu überwindender, insbesondere initial hoher Widerstand bei der Instrumentenführung die Sensibilität nachteilig beeinflussen. Dies tritt zum Beispiel im zahnärztlichen Alltag ein, wenn bei der Präparation das Winkelstück den Absauger berührt und der Behandler neu ansetzen muß. Anders ist dies jedoch, wenn die initiale Kraftaufbringung nicht größer als der zur Weiterbewegung des Instrumentes vorliegende Widerstand ist. Deswegen ist es besonders vorteilhaft, wenn die Schlitten einer Führungsvorrichtung beidseitig über mit ihrer jeweiligen Schiene verbundenen Federn eine Kraftbeaufschlagung erfahren, so daß zur Führung des Funktionselementes eine gewisse nahezu gleichbleibende Kraft aufgebracht werden muß (Anspruch 13). Die hierbei gleichzeitig eintretende Zentrierung hat keinen wesentlichen Wirkungseffekt. Ohne einen solchen ständigen Federzug verursacht die Bewegung des Funktionselementes, beispielsweise bei einem Drei-Achsgeschiebe aufgrund der zu überwindenden Trägheit eines jeden Schlittens [beim Behandler individuell stark ausgeprägt] ein irritierendes Gefühl, d.h. man neigt dazu, das Instrument bevorzugt, gemäß der Freiheitsgrade eines jeden Schlittens zu bewegen.

Zweckmäßig ist es, wenn alle die Bewegung des Funktionselementes relativ zur Befestigungsvorrichtung ermöglichenden Geschiebe und/oder Gelenke einer Führungsvorrichtung mit mindestens je einem insgesamt nicht weniger als drei Wegaufnehmern mit Anschluß an ein Informationsverarbeitungssystem ausgestattet sind (Anspruch 13).

Diese Ausführung ist die Grundlage für die Messung, Speicherung und Berechnung der Präparationsdaten, die zur (Teil)Herstellung der prothetischen Sanierung notwendig sind.

Auch in diesem erfindungsgemäßen Verfahren ist es möglich, die beschliffenen Flächen mittels eines Tasters oder des Schleifinstrumentes abzutasten. Im Gegensatz zu der genannten Patentschrift weist diese Ausführung den vorteilhaften Wirkungseffekt auf, daß die Abtastung per Hand durchgefehrt wird und daß der Schleifvorgang mit derselben Apparatur, gegebenenfalls nach Instrumentenwechsel, bewerkstelligbar ist. Ein fehlerquellenreicher Gerätewechsel entfällt. Die manuelle Abtastung trägt den weiteren zeitsparenden Vorteil in sich, daß Stellen größerer präparationstechnischer Wichtigkeit, beispielsweise der Präparationsgrenze benachbarte unbeschliffene Flächen, durch wiederholte Abtastung besonders sorgfältig aufgenommen und dadurch Abtastfehler durch den Behandler eleminiert werden können.

Besonders vorteilhaft ist es, die Bewegungen des Winkelstückes während des Präparationsvorganges zu registrieren, wobei dem Informationsverarbeitungssystem die Abmessungen der jeweiligen Schleifinstrumente bekannt sind. Auf diese Weise ist es nämlich möglich, auf eine Punkt zu Punkt-Vermessung der dreidimensionalen Schliff-Fläche zu verzichten und stattdessen den Verlauf des Bohrers in Form einer (Krone) oder mehrerer Linien (Inlay) im Raum zu verfolgen und hieraus die Positiv- oder Negativform des Stumpfes im Bereich der beschliffenen Abschnitte zu errechnen. Etwaige Ungenauigkeiten durch die anlagerungsbedingte Auslenkung eines rotierenden Schleifinstrumentes, können gleichzeitig gemessen, empirisch ermittelt, errechnet und/oder durch Aufnahme von mindestens zwei Tastpunkten auf einer parallel zur Rotationsachse ausgerichteten Linie der Präparationsfläche kontrolliert werden.

Die über die Präparationsgrenze hinausgehenden Zahnflächen, wie auch einzelne Flächen der Nachbarzähne, d.h. die zugewandten Approximalflächen müssen zusätzlich abgetastet werden.

Durch diesen Vorgang läßt sich die Aufnahme der Meßdaten erheblich vereinfachen, fehlerquellenärmer gestalten und beschleunigen.

Von besonderem Vorteil ist es, die Schlitten einer Führungsvorrichtung mit mechanisch zuschaltbaren Bewegungsvorrichtungen mit Anschluß an das Informationsverarbeitungssystem auszustatten (Anspruch 13). Nach halbindividueller (Vor)Präparation eines Zahnes durch den Behandler und gleichzeitiger Speicherung dieser Bewegungen kann nun in den Rechner ein weiterer vorzugsweise minimaler Abtrag des Zahnstumpfes einprogrammiert werden. Dieser steuert die Bewegungsvorrichtungen und ermöglicht die "maschinelle" (Nach)Präparation in einem Zug ohne Führung durch den Behandler. Der Wirkungseffekt dieses scheinbar aufwendigen Vorgehens besteht darin, daß der Behandler in einer ihm nahezu gewohnten Weise, die Zahn(vor)präparation planen und durchführen kann und etwaige durch die manuelle Führung bedingte nachteilige Effekte, wie z.B. erneutes Ansetzen, vergleichsweise lange Schleifdauer u.a.m. beseitigt werden können.

So läßt sich die Präzisierung der gewonnen Werte indirekt durch das Beschleifen in einem Zug mit kürzester Schleifdauer und Ausschluß fremder Krafteinwirkungen erreichen, sofern an jeder Stelle des Stumpfes ein zumindest minimaler Abtrag stattfindet. Außerdem ist durch Abtrag nur geringer Mengen die Fortführungsgeschwindigkeit des Schleifinstrumentes bei gleichbleibender Anlagerungskraft relativ hoch. So wird mit Abnahme der Präparationszeit die Wahrscheinlichkeit des Auftretens von Meßfehlern, verursacht durch unerwünschte Bewegungen zwischen Funktionselement und Objekt kleiner (siehe auch oben). Auch präparatorisch enstehen Vorteile, da z.B. die Kantenschärfe der Präparationsgrenze bei nur einmaligen Entlangschleifen besonders hoch wird und Zacken im Verlauf der Präparationsgrenze vermieden werden können.

Berücksichtigt man, daß unter klinischen Gesichtspunkten die, die Sanierungsgrenze beinhaltende bzw. bildende Schleifkörperbewegung den größten Stellenwert der Randgestaltung einnimmt, besteht sogar die Möglichkeit die maschinelle (Nach)-Präparation beispielsweise bei einer Stufenpräparation einer vollkeramischen Krone auf die zirkuläre Bewegung in eimem Zug mit einem zylindrischen Diamanten, vorzugsweise mit teilkugelförmigen Kopf zu beschränken.

Minimale Abweichungen im Kauflächenbereich des Stumpfes sind weniger wichtig, sofern die gemessene Gestalt des Stumpfes die Wahre nicht unterschreitet.

Es ist besonders zweckmäßig, wenn die Schlitten der Führungsvorrichtung je eine Arretiervorrichtung aufweisen, die ihre Bewegung auf ihrer Schiene verhindern und vom Behandler vorzugsweise per Fußpedal bedienbar sind (Anspruch 13). Es besteht aber auch die besonders vorteilhafte Möglichkeit, die Steuerung der Arretiervorrichtungen über den Rechner durchzuführen. Auf diese Weise kann der Behandler die Präparationsbewegungen manuell durchführen, wobei das Überschreiten der Präparationsbegrenzung durch die Einschaltung der Arretiervorrichtung bei Erreichen der gespeicherten Grenzposition verhindert wird. Es besteht auch die Möglichkeit, die Führung des Funktionselementes indirekt durchzuführen. Die Führungsschlitten sind über die Bewegungsvorrichtungen arretiert. Der Behandler führt den mit Drucksensoren bestückten Griff. Durch Überschreiten eines festgelegten Druckes fahren die Schrittmotoren das Funktionselement, in entsprechende Richtung der "führenden" Hand des Behandlers nach. Bei einer Anordnung der Führungsvorrichtung gemäß des Anspruchs 10 ist es zweckmäßig, ihre Ausrichtung zu den Objektzähnen derart zu wählen, daß je eine der drei Bewegungsachsen parallel zur mesio-distalen, orovestibulären und anatomischen bzw. prothetischen Zahnachse orientiert sind. Der Behandler kann durch Arretierung, beispielsweise des der anatomischen Achse parallelorientierten Schlittens das Schleifinstrument innerhalb einer beliebigen senkrecht zur Zahnachse angeordneten Ebene führen. Dies ist von besonderem Interesse bei der Präparation von Einlagefüllungen und 3/4-Kronen, da hier senkrecht zur Belastungsachse ausgerichtete und ebene Kavitätenböden, sowohl funktionell, als auch herstellungstechnisch besonders vorteilhafte Wirkungseffekte enthalten.

Bei der Präparation zur Aufnahme von Klebebrükken, z.B. Marylandbrücken ist es wichtig, möglichst wenig Substanz abzutragen und das Schleifen innerhalb des Dentins auf das notwendigste zu beschränken. Um die Haftung der Brückenkonstruktion nicht allein auf die Verbundfestigkeit des Composites beschränken zu müssen, ist es besonders wirkungsvoll, trotz des substanzschonenden Abtrags hohe Retentionsund Friktionswerte der Versorgung zu realisieren. Mit Hilfe der erfindungsgemäßen halbindividuellen Präparation lassen sich diese Anforderungen nahezu ideal erfüllen. Insbesondere hier ist aus statischen Gründen die erwähnte Arretierung des der anatomischen Achse parallelorientierten Schlittens vorteilhaft. Weiterhin ist es in diesem Falle zweckmäßig, die zur mesiodistalen Zahnachse parallelorientierte Schiene eher parallel zur Pfeilerachsen-Verbindungslinie auszurichten. Durch Arretierung zweier Schlitten mit einer verbleibenden eindimensionalen Bewegungsfreiheit des Funktionselementes auf der Pfeilerverbindungslinie wird dem Zahnarzt in einfacher Weise das Präparieren eines besonders effektiven Retentions-, Friktions- und Abstützelementes durch Anlegen eines Kastens in der Form des verwendeten, beispielsweise zylindrischen Schleifkörpers ermöglicht (auch Pinledge-Präparation möglich).

Die Gestaltung der Arretiervorrichtungen kann auf mehreren Wegen stattfinden. Besonders einfach ist es, am Schlitten befestigte, die Führungsschiene umgreifende, elektromagnetisch oder hydraulisch betriebene Klemmvorrichtungen einzusetzen. Eine Arretierung kann aber auch in besonders vorteilhafter Weise durch die mechanische Kuppelung der im Anspruch 24 aufgeführten Bewegungsvorrichtung stattfinden.

Vorteilhaft kann es sein, einen Schlitten einer Führungsvorrichtung mit einem Gegengewicht auszustatten, das in seiner Bewegungsfreiheit parallelorientiert zum Schlitten selbst angeordnet ist und mit diesem über eine Umlenkrolle beidseitig seilzugartig in Verbindung steht Anspruch (13). Auf diese Weise können durch die Position und Positionsänderungen der Apparatur im Raum gravitationsbedingte Kräfte kompensiert werden.

Die im Anspruch 14 gekennzeichneten Merkmale geben vorteilhafte Möglichkeiten der substanzabtragenden Instrumente an.

Nach dem Sandstrahlprinzip oder mittels Laser arbeitende Instrumente tragen den wesentlichen Vorteil in sich, daß der Abtrag der Zahnsubstanz kraftlos stattfindet. Abtragungsbedingte Kräfte mit der Folge etwaiger Ungenauigkeiten treten nicht auf.

Vorteilhaft ist es, rotatorisch betriebene Schleifkörper einzusetzen, da sie eine Formgebung der Schliffläche gewährleisten, eine hohe Abtraggeschwindigkeit und vergleichsweise effektive Kühlung ermöglichen, relativ geringe Kräfte verursachen und nur eine einfache, dem Zahnarzt gewohnte Handhabung bedürfen.

Besonders vorteilhaft kann es sein, die Substanzabtragung zumindest teilweise mit Schwing-Schleifinstrumenten durchzuführen. Die Schleifkörperbewegung kann dabei in Form einer oszillierenden Teilrotation [Giromatic] oder einer Hin-und Herbewegung stattfinden[EVA-System]. Ein besonderer Wirkungseffekt dieser Anordnung besteht beispielsweise in der platzsparenden Gestaltungsmöglichkeit des Schleifkörpers ( keine Rotationssymmetrie erforderlich). Auch können Seitenauslenkungen auf Grund der kleineren Bewegungsfreiheit minimiert werden.

Zweckmäßig ist es, wenn ein am Funktionselement angebrachtes Schleif-Bohrinstrument in seiner Form, Größe und Position relativ zu einem Fixpunkt an der Führungsvorrichtung in dem Informationsverarbeitungssystem gespeichert ist (Anspruch 15). Mit Hilfe der Wegaufnehmer der Führungsvorrichtung kann die geometrische Form der Präparationsflächen über den zwei- oder dreidimensional registrierten Bewegungslinienverlauf gemäß des verwendeten Instrumentes errechnet werden. Aus der Vielzahl der sich überschneidenden und tangierenden Linien werden jeweils die Grenzlinien berücksichtigt. Da die Position des Schleifkörpers ebenfalls bekannt ist, kann auch ein Instrumententausch mit berechnet werden.

Es besteht aber auch die Möglichkeit, auf die Speicherung der Instrumentenposition zu verzichten, wenn beispielsweise nur ein Instrument für die Präparation eines Zahnes verwendet wird. In solchen Fällen ist es zweckmäßig die Gestaltung der Kaufläche nach Schwenkung des Schleifkörpers um eine mesiodistal parallele Zahnachse (s.o.) vorzunehmen. Diese Schwenkung wird ebenfalls registriert und entsprechende Positionsänderungen des Schleifklörpers werden errechnet.

Der Instrumententausch selbst kann auf verschiedenen Wegen stattfinden. Einfach und kostengünstig ist es, nur den Schleifkörper auszuwechseln. Es besteht aber auch die vorteilhafte Möglichkeit, den gesamten Bohrerkopf gegebenenfalls mit Antriebstechnik oder Anteile dessen über eine exakte Befestigungsmöglichkeit mit unverwechselbarer reproduzierbarer Position zu wechseln. Auf diese Weise können die aufwendigen Bohr-Schleifköpfe technisch vereinfacht und präzisiert werden.

Bei der präparativen Gestaltung eines zu versorgenden Zahnes besteht ein vorteilhafter Teilaspekt darin, daß einerseits eine hohe Friktionsfläche (parallel zur Einschubrichtung), andererseits eine genügend große Auflagefläche (senkrecht zur Einschubrichtung) realisiert werden kann. Das erfindungsgemäße Verfahren kann diese Ziele nahezu iadeal erfüllen. Ein hoher Friktionswert kann aber auch nachteilige Effekte mit sich bringen, wie beispielsweise das Verkanten der Krone bei der Zementierung. Deswegen kann es besonders vorteilhaft sein, die Präparation der Zahnseitenflächen mittels leicht konisch geformten Schleifkörpern durchzuführen.

Besonders vorteilhaft kann es sein, wenn das substanzabtragende Funktionselement einen Distanzhalter mit über den Schleifkörper hinausgehender Länge aufweist. Dieser Distanzhalter gerät mit seinen Armen beim Schleifvorgang mit der hierdurch entstehenden Restaurationsgrenze ab der eingestellten Präparationsstärke in mechanischen Kontakt und gewährleistet damit einen durchgehend gleichbleibenden Substanzabtrag. Stellen, die aus klinischen Gründen ein stärkeres Beschleifen bedürfen (Platz für die Verblendung), werden mit einem verstellten, ausgetauschten oder ohne Distanzhalter nachpräpariert.

Bei der Wahl des Schleifinstrumentes und seiner Form gelten grundsätzlich die Regeln der herkömmlichen Präparation. Es besteht jedoch auch die Möglichkeit, bei Metallresttaurationen Stufenpräparationen mit dem Vorteil scharfer Präparationsgrenzen und hoher Stabilität im Randbereich, bei vergleichsweise geringem Substanzverlust vorzunehmen, da eine gußfreie Herstellung möglich ist.

Bei dem erfindungsgemäßen Verfahren stellen besonders geeignete Formen der Schleifkörper, der Torpedo (Metall) der Zylinder mit abgerundeter Kante (Keramik-Füllungen und 3/4 Kronen) und der Zylinder mit Teilkugelkopf (Keramik-Kronen) dar.

Diese Schleifkörper ermöglichen nämlich auch eine besondere Art der individellen Fräsung einer Restauration in einer Frässchleifmaschine. Hierbei wird der überdimensionierte Rohling, vorzugsweise nach einem Vorschliff zumindest teilweise mittels eines Schleifkörpers, der mindestens zu einem Teil der Negativform des Instrumentes zur Präparation der Sanierungsgrenze entspricht, beschliffen. Auf diese Weise kann eine besonders präzise dem Stumpf entsprechende Passung erreicht und der Schleifvorgang verkürzt werden. Ungenauigkeiten wären in erster Linie auf Instrumentenverschleiß zurückzuführen. Gleiches gilt übrigens auch für die Zahnpräparation. Der Instrumentenverschleiß läßt sich durch exaktes Vorschleifen und gegebenenfalls zusätzliches Bewegen des rotierenden Schleifinstrumentes parallel zu seiner schleifaktiven Oberfläche minimieren [ein zylindrischer Diamant wird beispielsweise achsparallel, ein bikonkav gestalteter Diamant auf einer Kreis-, bzw. Kurvenbahn hin- und herbewegt].

Bei Kronen mit vollkeramischer Randgestaltung besteht insofern eine Problematik, als ein zylindrischer Schleifkörper, der nicht ausschließlich senkrecht zu seiner Rotationsachse geführt wird, in Abhängigkeit des Führungswinkels eine wechselnde Negativform der Stirnfläche ausweist. Besonders vorteilhaft ist es deswegen, wenn der Zylinder an seiner Stirnfläche beispielsweise in Form einer Viertelkugel gestaltet ist.

Ein solches Instrument ermöglicht eine girlandenförmige Präparation mit einem maximalen Steigungswinkel von 45° bei einer vergleichsweise flachen Stirnfläche am Zahnstumpf. Entsprechendes gilt für eine Halbkugelform (90°) und Achtelkugelform (27°).

Unter klinischen Gesichtspunkten ist es besonders vorteilhaft, bei der Gestaltung der den Präparationsflächen zugewandten Stellen den randnahen Abschnitten einer Restauration einen sehr hohen Stellenwert der realisierbaren Präzision einzuräumen. An den randfernen Abschnitten ist danach um soviel mehr Substanz abzutragen, als im Rechner gespeicht, so daß es gesichert ist, daß ein Kontakt der applizierten Restauration mit dem Zahnstumpf immer im randnahen Bereich vorzugsweise unmittelbar an der Präparationsgrenze vorliegt. Unter Randbereich ist zumindest der Abschnitt der Präparationsfläche zu verstehen, dessen Flächen - von der Präparationsgrenze ausgehend - die Zahn-, bzw. Restaurationsachse in einem größeren Winkel schneiden, bevor sie sich dieser friktionsgemäß tangential annähern. Der Zementspalt ist dadurch im Randbereich am kleinsten und steigt in den randfernen Abschnitten bis mindestens in den Bereich der realisierten Auflösung des Verfahrens an (Figur 12). In Ahängigkeit der erreichten Präzision kann eine Abfluß- und Entlüftungsbohrung als obiligat angesehen werden. Zewckmäßig ist es, diese Bohrung genormt durchzuführen und nach Applikation der Restauration diese wiederum mittels eines kongruent geformten Stiftes zu verschließen, um einer etwaigen Zementauswaschung entgegenwirken zu können. Eine solche Bohrung kann weiterhin dazu dienen, die Entfernung einer provisorisch oder definitiv zementierten Arbeit zu ermöglichen, ohne Zahn oder Restauration zu beschädigen. Hierzu wird ein druckbeständiger Anschluß an die Bohrung befestigt und vorzugsweise eine Flüssigkeit mit gegbenenfalls zementlösender Aktivität über einen Zuführungsschlauch unter relativ hohem Druck zugeführt. Die Flüssigkeit gelangt zwischen Zement und Krone, oder Zahn und hebt die Restauration vom Stumpf.

Zweckmäßig ist es, wenn das Funktionselement ein Abtastinstrument ist, das in seiner Form und Größe im Bereich der Abtastfläche und relativen Position zu einem festgelegten Fixpunkt an der Führungsvorrichtung in dem Informationsverarbeitungssystem gespeichert ist (Anspruch 15).

Eine der wesentlichen Aufgaben der Abtastung besteht in der exakten geometrischen Weg- oder Formerfassung der unbeschliffenen und Präparationsgrenze unmittelbar benachbarten Zahnflächen. Besonders in Bereichen, die unter in vivo Bedingungen nicht, oder nur schwer sondierbar, bzw. bearbeitbar sind. Hierzu zählen die im Approximalraum und subgingival lokalisierten Restaurationsränder.

Bei den später noch genauer zu erläuternden Verfahrensmöglichkeiten der Sanierung kann es von besonderem Vorteil sein, das Zeitintervall, beginnend von den endgültigen gleichzeitig registrierten Präparationsbewegungen [Nachpräparation /Finieren] bis hin zur Abtastung der Grenzflächen möglichst kurz zu halten. Damit können etwaige Ungenauigkeiten der Detektion, verursacht durch relative Bewegungen der Befestigungsvorrichtung zum Arbeitsobjekt, minimiert werden. Dieses Zeitintervall sollte zumindest die Gesamtheit der zuletzt durchgeführten Präparationsbewegungen im Bereich des Sanierungsrandes und die Abtastung der zuvor genannten Zahnflächen beinhalten.

Der Patient kann dann angehalten werden, in diesem Zeitabschnitt ruckartige Bewegungen sowie bedingte Reflexe zu unterbinden.

Bei den supragingival oral oder vestibulär gelegenen und leicht erreichbaren Rändern sind derart bedingte Ungenauigkeiten in einfacher Weise korrigierbar.

Eine besonders einfache Ausführung des Abtastinstrumentes stellt seine Gestaltung in Form einer am Schaft befestigten Kugel dar. Dabei sollte der Kugeldurchmesser den minimalen zervikalen und lateralen Extensionsabstand von 0,5 bis 1mm nicht wesentlich überschreiten und generell so groß wie möglich sein.

Zweckmäßig kann es sein, wenn das Abtastinstrument vorzugsweise um eine parallel zur mesiodistalen Zahnachse ausgerichtete Achse rotierbar ist, wobei diese Positionsänderung stufenförmig oder stufenlos registriert wird (siehe oben). Sanierungen, deren Ränder beträchtlich oberhalb des anatomischen bzw. prothetischen Äquators zu liegen kommen, bedingen bei der Abtastung stark unter sich gehende Abschnitte, [zum Beispiel bei Einlagefüllungen im Bereich der Extensionen] die übermäßig dimensionierte Tastinstrumente erforderten. Die Schwenkbarkeit gewährleistet auch die Veringerung des vertikalen Platzbedarfs, beispielsweise bei der Abtastung der Kauflächenanteile.

Es besteht aber auch die Möglichkeit, das Abtastinstrument in Form eines Tellers, einer bikonvexen Linse, eines HOU-Scalers und gegebenenfalls mit Kerben versehen zu gestalten. Hierdurch können größer dimensionierte und damit starrere Instrumente Verwendung finden, ohne in funktioneller Hinsicht den minimalen zervikalen und lateralen Extensionsabstand von 0,5 bis 1mm überschreiten zu müssen. Es ist für bestimmte Ausführungen sinnvoll, das Abtastinstrument um seine Längsachse zumindest teilweise rotierbar zu lagern. Weiterhin ist es zweckmäßig, den Instrumentenschaft nicht gradlinig, sondern mit gebogenem Verlauf und vorzugsweise im Rotationszentrum lokalisierter Instrumentenspitze zu gestalten.

Besonders vorteilhaft kann es sein, wenn das Abtastinstrument an seiner Abtastfläche, -linie oder -punkt substanzabtragende Eigenschaften im Sinne eines Scalers oder feinkörnigen Diamanten aufweist. Auf diese Weise wird dem Behandler eine Differenzierung ermöglicht, ob nämlich der mechanische Kontakt an dem (rauhen) Abtastpunkt oder an anderer (glatter) unvorhergesehener Stelle vorliegt. Weiterhin ist bei schon vergleichsweise geringen Anlagerungskräften ein Kontakt eindeutig fühlbar. Die scharfe Abtastung vermeidet auch spätere Substanzabstrengungen (gelockerte Prismen) und unerwünschte Ablagerungen (Blut) als Fehlerquelle werden eliminiert. Hier wird auch ein wesentlicher Wirkungseffekt der Erfindung deutlich, daß nämlich im Gegensatz zu allen bekannten Verfahren weder eine Trockenlegung, Blutstillung noch Zahnfleischverdrängung notwendig ist. Zweckmäßig ist es, wenn das Funktionselement mit Vorrichtungen zur kontinuierlichen Messung der Position seines abtragenden und/oder tastenden Instrumentes ausgestattet ist. Die zu messenden Parameter sind die Achsialverschiebung und Auslenkungen aus dem Rotationszentren und können, beispielsweise elektromagnetisch per induzierten Spannungen, optisch durch Änderung des Reflexionswinkels, oder akustisch durch Änderung des Reflexionswinkels und der Reflektionszeit bewerkstelligt werden. In den beiden letzteren Fällen weist das rotierende oder schwingende Instrument oder dessen mitbewegende Halterung entsprechend geformte Reflektoren auf. Es besteht aber auch die Möglichkeit, die Schleifkörperauslenkung empirisch oder rechnerisch zu ermitteln, indem Anlagerungsdruck und -richtung relativ zur Schlifffläche berücksichtigt werden.

Weiterhin ist es zweckmäßig, im Rahmen der maschinellen (Nach) Präparation, innerhalb der mechanischen Verbindung eines jeweiligen Schlittens über die Bewegungsvorrichtung mit dem Führungssockel Druck-, oder Kraftdetektoren mit Anschluß an den Rechner anzubringen. Über einen Steuer-Regelkreis wird dann die Vorschubgeschwindigkeit des Funktionselementes gesteuert. Ein besonders vorteilhafter Wirkungseffekt dieser Anordnung besteht darin, daß die durch die Druckmessung unvermeidbare Wegänderung keine Auswirkung auf die Übereinstimmung der gemessenen und tatsächlichen Position des Funktionselementes hat, weil die Bewegung zwischen Motor und Führungsschlitten, nicht dagegen zwischen Führungsschlitten und Schiene stattfindet und dem Rechner ausschließlich Werte der relativen Bewegung zwischen Führungsschlitten und Schiene über die Wegaufnehmer zukommen. Aufgrund der instrumentenfernen Kraftmessung müssen die Werte auf das Funktionselement projiziert umgerechnet werden. Diese vorteilhafte Wirkung existiert auch bei der Ausstattung des Führungsgriffes zur halbindividuellen (Vor)Präparation mit Kraft-, bzw. Druckdetektoren zur Messung der dreiachsial auftretenden Kräfte.

Besonders vorteilhaft ist es, wenn das Funktionselement den Meßkopf eines Gerätes zur geometrischen Form oder Wegerfassung mit Anschluß an der oder einer weiteren mit ersterer kommunizierenden Informationsverarbeitungseinheit darstellt und die relative Position des Meßkopfes zur Führungsvorrichtung im gesamten Informationsverarbeitungssystem gespeichert und verarbeitbar ist.

Durch diese Anordnung lassen sich insbesondere aus der modernen Zahntechnik, aber auch aus der Zahnheilkunde bekannte Lesegeräte (CEREC-Verfahren) optimiert und verfahrenserweitert einsetzen.

Eine Ausführungsart dieser Anordnung besteht darin, daß anstatt der mechanischen Abtastung eine berühungslose Objektvermessung stattfindet. Dabei stellt das Funktionselement ein punkt- oder linienförmig im A-Scan betriebenen Ultraschall- oder Laserdetektorkopf eines Meßgerätes dar. Die zur Erfassung notwendige Lesekopfbewegung wird vorzugsweise über die motorbetriebene Fortbewegung zweier bzw. eines Schlittens über den Rechner gesteuert.

Bei einer zweiten Ausführungsart kommen als Meßverfahren insbesondere bildgebende Verfahren mittels Videotechnik, Holographie, Laser-, oder Ultraschalldetektoren im B-Scan-Betrieb in Mono- oder Stereotechnik. Der wesentliche Vorteil dieser Anordnung besteht darin, daß durch Festlegung bzw. Bekanntsein gewisser Parameter der Weg-und Formerfassung, [Lokalisation von Kammera relativ zum Bearbeitungsobjekt / mehrere Aufnahmen von exakt bekannten unterschiedlichen Punkten können genutzt und verrechnet werden] die Möglichkeit der vereinfachten, bzw. exakteren und informationshaltigeren Verarbeitung der durch das bildgebende Verfahren gewonnenen Werte.

Im Vergleich zur mechanischen Abtastung liegt zwar eine ungenauere aber äußerst einfache und schnelle Objektvermessung vor. Durch Kombination der Verfahren lassen sich in der Zahnarztpraxis die Versorgung der Patienten planungs-, verfahrenstechnisch und ästhetisch verbessern und preisgünstig durchführen.

So lassen sich beispielsweise dreidimensionale Objektvermessungen mit schon bekannten Verfahren kombinieren. Herkömmliche Videoaufnahmen werden im Computer digitalisiert und ermöglichen die Bewegung und Formänderung einzelner Bildabschnitte. Dem Patienten kann die geplante Gestaltung der Restauration eindrucksvoll auf dem Bildschirm gezeigt werden. Die auf dem zweidimensionalen Bild erarbeiteten Zahnformen und deren Änderungen können anschließend auf das dreidimensionale Bild (z.B aus einem Situationsmodell oder einer intraoralen Aufnahme noch vor der Sanierung gewonnen) übertragen werden. Nach Herstellung einer provisorischen (Kunststoff)-Versorgung können Patient und Behandler nach einer Probetragezeit noch weitere Änderungen vornehmen.

Zweckmäßig kann es sein, wenn des substanzabtragende Instrument eine Chirurgiefräse darstellt. Aus klinischen Gründen ist den innengekühlten Fräsen [nach Kirschner] der Vorzug zu geben.

Besonders vorteilhafte Wirkungseffekte ergeben sich bei der Inkorporation von Implantaten und bei der Transplantation von Zähnen. So lassen sich neben rotationssymmetrischen und blattförmigen Implantaten auch individuell geformte Implantate applizieren, da das Implantatlager mit höchster Präzision nahezu beliebig gestaltet werden kann. Hierzu zählen auch unter sich gehende Präparationen, beispielsweise um ein Implantat auch durch Klemmwirkung initial fest verankern zu können. Vorteilhafte Wirkungseffekte einer solchen Anordnung sind dem Fachmann offensichtlich und teils bekannt.

Bei der autoalloplastischen Transplantation von Zähnen - verlagerte und retinierte Eckzähne, Prämolaren und Weisheitszähne - ist es zweckmäßig, den extrahierten Zahn in einer speziellen Vorrichtung zur Vermessung der Wurzel und Krone im Kronenbereich fest einzuspannen und die zumindest mit Flüssigkeit (vorzugsweise Nähr- oder Spüllösung) benetzte Wurzel zu vermessen. Um eine Verletzung der parodontalen am Zahn befindlichen Restgewebe zu minimieren, ist es sinnvoll, die Abtastung berührungslos durchzuführen. Dies kann in einfacher Weise auch über eine Elektrode, die motorbetrieben und regelkreisgesteut sich dem Zahn nähert, der mit der Gegenelektrode elektrisch kontaktiert ist und diesen über den elektrischen Sollwert-Widerstand in bestimmter Entfernung abtastet.

Eine besonders vorteilhafte Formerfassung stellt die Ultraschalldetektion (A-Scan) dar. Die Wurzel kann dabei vollständig in Flüssigkeit getaucht sein. Die Form der Wurzel und vorzugsweise auch der Krone dient der Fräsung der künstlichen Alveole. Dabei ist es zweckmäßig, diese Knochenkavität, einerseits in bestimmten Ausmaß größer zu gestalten als die Wurzel, um Quetschungen beim Inkorporieren zu minimieren und ausreichend Platz für das parodontale Gewebe und ihre Regeneration zu haben und andererseits bei gekrümmten oder gegebenenfalls unter sich gehenden Stellen der Kavität diese bei der Transplantatinkorporation zu berücksichtigen und gegebenenfalls zu beseitigen. Gleichzeitig kann die Inkorporationsbewegung rechnerisch geplant und dem Behandler dokumentiert werden.

Zur optimalen Positionierung der Knochenkavität innerhalb des zur Verfügung stehenden Alveolarknochenabschnittes ist es zweckmäßig, mittels der applizierten Apparatur nach Entfernung des Transplantates die dreidimensionale Vermessung des zur Verfügung stehenden Knochens und auch der angrenzenden Nachbarzähne vorzunehmen. Die Vermessung kann dabei indirekt über die Abtastung der Schleimhaut und punktuelle Aufnahme der Schleimhautdicke (Sonde mit Silikonstop), oder auch über empirische Errechnung (geschätzte Schleimhautdicke) stattfinden, oder auf direktem Wege nach Aufklappung oder punktuellen Abtastung mit schleimhautdurchdringenden Sondenspitzen realisiert werden.

Es besteht aber auch die vorteilhafte Möglichkeit, präoperativ ein Situationsmodell des Arbeitsgebietes zu erstellen und dieses unter Berücksichtigung der Schleimhautdickenmessungen entsprechend zu vermessen. Im Labor kann man auch die bestehende Zahnlücke mit einer Wachsmodellation versehen (Form und Größe entspricht dem Agonisten) und diese ebenfalls abtasten. Aus diesen Werten wird im Rechner die Ausdehnung des zur Verfügung stehenden Knochens in Relation zu den Nachbarzähnen errechnet.

Nach Entfernung, retrograder Wurzelfüllung, vorzugsweise mit Stiftinsertion und Vermessung des Transplantates, wird im Computer seine Einordnung in das Knochenmassiv geplant, wobei der Behandler über dreidimensionale Bilder und Schnittdarstellungen eingreifen kann.

Die Applikation der Apparatur findet vorzugsweise nach der Explantation und Wundversorgung statt. Das mit einem Taster bestückte Funktionselement wird nach der im Rechner ermittelten Transplantatachse parallel zu dieser ausgerichtet. Hierzu kann auch eine auf dem Modell hergestellte, an den Nachbarzähnen befestigte Kappensachiene mit vorgegebener Positionierungsbohrung für das Funktionselement dienen. Zur Fixpunktorientierung werden die Strukturen erneut zumindest punktuell abgetastet. Die Position des Funktionselementes im Operationsgebiet ist nun bekannt. Gegebenenfalls kann noch eine Korrektur der Ausrichtung vorgenommen werden. Die geplante Knochenkavität wird an entsprechender Stelle gefräst. Die Fräsung kann maschinell vorzugsweise jedoch halbidividuell geführt stattfinden, wobei ein Überschreiten der geplanten Kavitätengrenze durch computergesteuerte Arretierung eines jeweiligen Schlittens verhindert wird. Das Funktionselement kann aber auch mittels einer Koppiervorrichtung über einen Führungsstab, der die vorgefräste Kavität abtastet, geführt werden.

Vorteilhaft kann es sein, wenn das Funktionselement die Führungsvorrichtung mit dem Gegenkiefer verbindet, mindestens ein Gelenk, vorzugsweise als Kugelgelenk gestaltet, mit mindestens zwei linearen Wegaufnehmern zur Registrierung der Bewegung in diesem Gelenk aufweist. Die Befestigung im Gegenkiefer kann auch mittels der erfindungsgemäßen Befestigungsvorrichtung stattfinden. Es besteht aber auch die Möglichkeit, die aus der Gnathologie bekannten Befestigungsvorrichtungen einzusetzen.

Diese Ausführung ermöglicht über die Speicherung der Bewegungen im besagten Kugelgelenk und den Führungsschlitten eine vollständige Simulation der Unterkieferbewegungen.

Es ist zweckmäßig, die erfindungsgemäße Apparatur im Oberkiefer anzubringen, um den Unterkiefer in seinen Artikulationsbewegungen möglichst wenig einzuschränken um, eine muskuläre Entspannung gewährleisten zu können.

Im Rechner kann die Scharnierachse bestimmt und unter Festlegung des Kondylenabstandes (ermittelter physiologischer oder durch den Artikulator vorgegebener Condylenabstand) die individuelle Fräsung der beiden Gelenkpfannen errechnet werden.

Vorteilhaft ist es, wenn die Befestigungsvorrichtung für die Anbringung an eine Tragevorrichtung vorgesehen ist, die mit dem Behandlungsstuhl, dem Boden, der Decke oder einer Wand des Behandlungszimmers fest verbunden ist, einen parallel zur Fußbodenebene frei beweglichen, reibungsarm gelagerten Tisch aufweist, der über Federn, Leinen und/oder Stangen die tragende Verbindung zur Befestigungsvorrichtung ermöglicht (Anspruch 16).

Auf diese Weise wird der starr mit der Apparatur verbundene Schädel oder Unterkiefer des Patienten nicht mit der Schwerkraft der Geräteschaft konfrontiert. Unvermeidliche Bewegungen des Patienten durch diesen selbst oder den Behandler (Abstützung) wirken sich nur unwesentlich auf die bewegungslose Befestigung aus, da nur die Trägheit der Apparatur überwunden werden muß. Zur Minimierung der zuletzt genannten Problematik, kann es insbesondere bei relativ schweren Apparaturen zweckmäßig sein, die Patientenbewegung relativ zum Raum zu registrieren und den beweglichen Tisch rechnergesteuert über Bewegungselemente (Schrittmotoren) mitzubewegen.

Zweckmäßig ist es weiterhin, wenn der Tisch der Tragevorrichtung zusätzlich eine vertikale Verstellbarkeit zur Höhenverstellung relativ zum Behandlungsstuhl und eine vertikale Beweglichkeit zum Ausgleich relativ kleiner Bewegungen der applizierten Apparatur durch den Patienten aufweist. Bei der Abwärtsbewegung des Tragetisches wird einer durch Feder-, elastischer Zugwirkung oder Luftdruck bedingten Kraft entgegengewirkt, deren Betrag im Bereich der zu tragenden Masse liegen sollte. Vorteilhaft kann es sein, den Patienten die Höheneinstellung selbst zu überlassen, so daß dieser, individuell über das auf ihn einwirkende Gewicht, oder gar über eine Zugkraft entscheiden kann. Der Patient wird entspannter und ruhiger.

Diese Ausführungen tragen weiterhin den Vorteil in sich, daß beängstigende und schmerzhafte Wirkungen auf den Patienten auf ein Minimum beschränkt werden können.

Eine weitere Möglichkeit der Apparaturaufhängung besteht darin, daß die zum Tragen notwendige Kraft durch ein Gegengewicht aufgebracht wird, das zum Beispiel über Seilzug und Umlenkrolle mit der Apparatur in Verbindung steht.

Es kann aber auch von Vorteil sein, anstatt einer Aufhängung, die Apparatur stützend zu tragen. Dabei kann auch hier die Kraft zum Tragen einerseits durch Gegengewichte, andererseits durch hydraulische Kräfte oder Federwirkung realisiert werden. Diese Abstützung kann beispielsweise durch eine höhenverstellbare am Behandlungsstuhl oder Boden befestigte Säule, die die Apparatur trägt, stattfinden. Ihre Beweglichkeit kann durch einen verschieblichen Tisch, oder in besonders einfacher Weise durch ein Kugelgelenk, kardanisches Gelenk, elastischen Verbindungsstab oder dergleichen ermöglicht werden. Dabei sollte eine Grundposition der Säule durch elastische Kräfte passiv einnehmbar sein.

Es besteht auch die Möglichkeit, die am Patientenkopf angebrachte Befestigungsvorrichtung, wie auch die restlichen Teile der Apparatur starr im Raum zu befestigen. Vor- und Nachteile dieser Anordnung wurden schon weiter oben bei der Beschreibung der entgegengehaltenen Patentschrift erwähnt.

Besonders vorteilhaft kann es sein, wenn die Befestigungsvorrichtung von der Führungsvorrichtung abkuppelbar ist. So kann der Patient in Notfällen und zwecks Behandlungsunterbrechungen das Zimmer zwischenzeitlich verlassen, ohne die Apparatur tragen zu müssen.

Weiterhin ist es möglich, auf eine Aufhängung zu verzichten und die vom Patienten getragene Apparatur mit Gegengewichten zur Zentrierung des Gesamtschwerpunktes im Bereich der Wirbelsäule oder einem vom Patienten selbst bestimmten Punkt auszustatten.

Besonders vorteilhaft ist es, wenn das Informationsverarbeitungssystem Anschluß an ein bilddarstellendes Übertragungssystem für den Behandler aufweist, welches gleichzeitig als Eingabequelle für neue Informationen dient.

Gleiches ist auch zweckmäßig für eine akustische Informationsübertragung. Hierzu zählen beispielsweise akustische Befehlseingabe und Warnsignale, wie sie schon in der Technik bekannt sind.

Der optischen Übertragung kommt jedoch eine besondere Bedeutung zu. So kann der Behandler zum Beispiel seiner halbindividuellen Präparation oder der Abtastung schon von Beginn an folgen und etwaigen Unstimmigkeiten frühzeitig entgegenwirken. Zweckmäßig ist auch die simultane Objektdarstellung in Form eines dreidimensionalen und mehreren zweidimensionalen Projektionen durchzuführen, um dem Behandler optimalen Überblick zu verschaffen.

Besonders vorteilhaft ist es auch, sogenannte CAD-Programme einzusetzen, die bei der Planung und Präparation (z.B. Nachpräparation) förderlich sein können.

Ein besonders effizienter Einsatz CAD-artiger Programme liegt im Bereich der Planung anatomischer Formgebung der herzustellenden prothetischen Sanierungen.

An einem Beispiel soll dies verdeutlicht werden:

Ein zu versorgender noch unbeschliffener, vorzugsweise schon mit einer Aufbaufüllung versehener Zahn wird abgetastet, optisch oder akustisch vermessen. Diese Werte werden gespeichert und auf dem Bildschirm dargestellt.

An diesem registrierten Zahn kann auf dem Bildschirm eine Präparationsplanung vorgenommen und dargestellt werden. Dies läßt sich vorteilhafterweise auch unter Berücksichtigung der Werkstoffkenndaten des zu verarbeitenden Materials durchführen, so daß der Behandler durch farbliche Darstellung in räumlicher Gestalt neben Schnittdarstellungen die ursprüngliche Form des Zahnes, des momentanen Präparationsstandes und der Sollwert-Präparation optimal verfolgen kann. Weiterhin ist es vorteilhaft, auch Änderungen der ursprünglichen Außenkontur des getasteten Zahnes vorzunehmen und diese bei der Präparation zu berücksichtigen - verstärkte vestibuläre Ausdehnung der späteren Kronenform ermöglicht einen verminderten Substanzabtrag. Die Gestalt der späteren provisorischen oder entgültigen Versorgung kann betrachtet und verändert werden. Dies ist besonders dann von großer Bedeutung wenn gnathologische und ästhetische Probleme vorliegen. Es besteht nämlich die Möglichkeit, mit wenig Aufwand ein längerfristiges Provisorium oder ein Langzeit-Provisorium herzustellen. Nach Entscheidung über Erfolg oder Mißerfolg kann dieser Vorgang wiederholt werden, oder die entgültige Arbeit hergestellt werden, ohne eine erneute Abformung oder Präparation durchführen zu müssen.

Ist es vorteilhaft, die einfach strukturierten Zahnflächen am Bildschirm zu konstruieren, sind insbesondere bei den Kauflächen weitere Informationen notwendig.

Die Kauflächen eines zu versorgenden Zahnes weisen nämlich in praxi die größten Formmängel auf, so daß ihre Abtastwerte oftmals nur den Anforderungen eines Provisoriums gerecht werden können. Besonders vorteilhaft ist es deswegen, nach oder vor der Präparation die Kaufläche mit einem thermo- oder chemoplastischen Material zu beschicken, den Patienten den Schlußbiß einnehmen zu lassen und nach Erstarrung des Materials die antagonistische Kauflächenimpression abzutasten. Die hierbei gewonnen Werte geben die maximale (zentrische) mögliche Kaufläche an. Das gleiche Vorgehen wird wiederholt, wobei der Patient neben dem Schlußbiß zusätzlich alle Artikulationsbewegungen durchführt. Diese Werte ergeben das hier als Funktionskaufläche bezeichnete Relief. Beide Flächen können im CAD-Programm farblich differenziert übereinanderprojiziert werden. Die Maximalkaufläche ermöglicht dem Behandler dabei einen optimalen Überblick über die Antagonistenbeziehung und vereinfacht die anatomische Kauflächengestaltung. Die Funktionskaufläche stellt die maximal mögliche Ausdehnung des Kauflächenreliefs dar.

Per Cursor oder Maus werden die Kontaktpunkte markiert. Je nach okklusalem Typ werden gegebenenfalls Balancekontakte berücksichtigt. Im Zeichenprogramm werden nun nach anatomischen Kriterien Fissuren und Grübchen subtraktiv konstruiert. Planerisch bedeutet dies, daß die Kaufläche nur reduziert nich jedoch vergrößert werden darf.

Es besteht auch die Möglichkeit, mittels eines speziellen Rechenprogramms die Artikulationsbewegungen aus den beiden abgetasteten Flächen zu errechnen und zu simulieren. Weiterhin lassen sich die auf anderem Wege ermittelten Bewegungen (s.o.) einsetzen.

Soll die Kaufläche erst nach der Präparation ermittelt werden, besteht die besonders vorteilhafte Möglichkeit, vorab ein Provisorium mit kastenförmig ausgelassener Kaufläche für die Aufnahme des plastischen Materials in der Fräsmaschine herzustellen. Auf diese Weise läßt sich die Kauflächenerfassung besonders einfach und zügig durchführen. Ebenso können etwaige Korrekturen der zuvor konstruierten Restflächen unternommen werden.

Man kommt dabei auch mit einem "Provisorium" aus, wenn zuerst die Funktions- und folgend die Maximalkaufläche bestimmt wird.

Die in den Ansprüchen 1- 16 beschriebenen Ausführungen und Erweiterungen der erfindungsgemäßen Apparatur lassen sich in eine Vielzahl von Verfahren zur Herstellung von prothetischen Sanierungen einsetzen. Diese Verfahren beinhalten dabei eine halbindividuelle (Vor)Präparation des Zahnes und die zumindest teilweise Restaurationsherstellung durch eine rechnergesteuerte Fräsmaschine mit den aus der Instrumentenführung und vorzugsweise auch aus der Abtastung der randnahen unbeschliffenen Zahnflächen gewonnenen Werten.

Die vorteilhaften Wirkungseffekte der Verfahren wurden zum Teil schon in der Gerätebeschreibung aufgeführt.

Ein noch nachzutragender besonders vorteilhafter Wirkungseffekt der halbindividuellen Präparation besteht neben der einfachen Detektierbarkeit der hauptsächlich stattfindenden Parallelverschiebung des Funktionselementes darin, daß die schleifkörperbedingte formgebende Abtragung des Zahnstumpfes etwaige Ungenauigkeiten parallel zur Rotationsachse vernachlässigbar macht.

Es ist allgemein zweckmäßig, die noch unbeschliffenen Zähne vorab, zumindest grob - Kontrolle kann über Videoschirm stattfinden - abzutasten, um beispielsweise eine schnelle Provisoriumherstellung realisieren zu können und auch um nützliche Richtwerte bei der Restaurationsflächen-Konstruktion zu erhalten.

Eine Verfahrensmöglichkeit besteht darin, daß die aufgenommen Werte zur ausschließlich einzeitigen maschinellen Sanierungsherstellung dienen. Dabei ist es zweckmäßig, die ermittelten Werte in einem CAD-Programm zusätzlich konstruktiv ändern zu können. Dies betrifft in erster Linie die Kauflächen aber auch die Zahnseitenflächen.

Eine weitere Möglichkeit stellt das zweizeitige Herstellungsverfahren der Restauration dar. In der ersten Phase wird, wie beschrieben die Präparation und Werteregistrierung am Patienten vorgenommen. Aus diesen Informationen wird in der Fräs-Schleifmaschine der, der Präparationsfläche aufliegende Teil und die Außenflächen im unmittelbaren Randbereich der Restauration hergestellt. Eine Anprobe und gegebenenfalls notwendige Korrektur der halbfertigen Krone kann noch in der selben Sitzung stattfinden. Die zweite Phase beinhaltet die Weiterbarbeitung des Sanierungskernstücks im Laboratorium.

Das zweizeitige Vorgehen weist aber auch die Möglichkeit auf, eine Restauration - vorzugsweise minimal überdimensioniert - auf konventionellem Wege herzustellen und nachträglich eine rechnergesteuerte Korrektur vorzunehmen.

Die Kombination der Restaurationsherstellungsarten mittels individueller Frästechnik mit den bislang üblichen Verfahren trägt weitere vorteilhafte Wirkungseffekte der Erfindung in sich.

Ausgedehnte Gebißsanierungen erforderten nämlich einen äußerst komplizierten apparativen und kostenintensiven Aufwand, um ihre Herstellung unter Berücksichtigung gnathlogischer Kriterien computergesteuert durchführen zu können. Besonders deutlich wird dies, wenn auf Grund vorliegender Zahnfehlstellungen oder funktionsanalytisch ermittelten Bißlageänderungen, vorliegende oder antagonistische Kauflächen nicht verwendet werden können.

Das zweiphasige Herstellungsverfahren gewährleistet dagegen einerseits die computergestützte Randgestaltung mit hoher Präzision, die bislang einen hohen Zeit- und Kostenfaktor darstellte und andererseits die Kauflächengestaltung durch den Techniker die erfahrungsgemäß weniger zeitaufwendig ist. Von besonderem Vorteil ist es in diesem Zusammenhang, daß die erfindungsgemäße Einartikulation und Artikulator-Programmierung (s.o.) das Verfahren weiter vereinfacht und präzisiert, besonders dann, wenn man berücksichtigt, daß beim herkömmlichen Vorgehen an dieser Stelle leicht Fehler mit verherenden Konsequenzen auftreten können.

Die kombinierte Vorgehensweise ermöglicht auch die Anwendung der Keramikschichttechniken, so daß hohen ästhetischen Anforderungen in herkömmlicher Weise Rechnung getragen werden kann, ohne hohe Kosten zu verursachen. Die vom Patienten besonders begehrte vollkeramischen Randgestaltung von Kronen wird ebenfalls gewährleistet bei gleichzeitig bliebiger Materialkombinationsmöglichkeit. So läßt sich der Kronenkern aus Metall herstellen ohne die Präparationsgrenze zu erreichen. Auf diesen Kern wird keramische Masse zumindest minimal überdimensioniert aufgebracht, so daß der Kronenrand aus Keramik besteht. Nach Fertistellung wird die Krone computergestützt nachgeschliffen.

Besonders vorteilhaft ist es auch, den Kern aus konfektionierten Keramikrohlingen, auf die sich Keramik verbundfest aufbringen läßt, zu fräsen, und nachträglich die aufbrennbare Keramikmassen zu applizieren. Nimmt der weiße Rohling den Rand der Füllungs- oder Kronenränder ein, kann sogar auf eine computergestützte Korrektur verzichtet werden, sofern ein Verziehen des Rohlingmaterials durch Kontraktion auszuschließen ist.

Es soll an dieser Stelle nochmals erwähnt werden, daß auch zumindest die Teilherstellung herausnehmbarer Sanierungen mit dem erfindungsgemäßen Verfahren durchgeführt werden können, besonders wenn geschiebe- oder teleskopartige Verbindungselemente vorgesehen sind. So lassen sich beispielsweise Modellgußgerüste mit hoher Präzision herstellen. Gußtechnische Probleme wie Verziehungen der vergleichsweise groß, aber grazil gestalteten Gerüste oder besonders schwer verarbeitbare Materialien wie Titan und seine Legierungen können vollends beseitigt werden.

Bei der Herstellung der Restaurationen ist oftmals ein Umsetzen oder Wechsel der Haltevorrichtungen notwendig. Dies kann mittels punktuell greifender Klemmvorrichtungen oder durch chemo- oder thermoplastische Fixierung ermöglicht werden.

Die Arbeitsweise der rechnergesteuerten Fräs-Schleifmaschine ist nicht nur auf zerspanende Abtragung beschränkt, sondern beinhaltet auch auch andere Verfahren des Substanzabtrags, wie beispielsweise die Metallbearbeitung auf dem Wege der Funkenerosion oder Elektrolyse oder Keramikbearbeitung mittels Ultraschall.

Im Rahmen der chemischen der galvanischen Metallaufbringung auf Zähnen, körperfremden Materialien oder auf den Zementspalt unter in vivo Bedingungen, ist es zweckmäßig, die gefertigte Restauration im Bereich der Sanierungsgrenze haftfest mit Metall zu beschicken, wobei die aufzutragende Metallschichtdicke bei der Fräsung berücksichtigt wird, oder nach Metallaufbringung ein Korrekturschliff stattfindet. Diese Metallaufbringung auf das Werkstück im Labor kann auch auf andere in der Technik bekannte Weise - Vakuumbedampfung - insbesondere durch Verfahren die mit erhöhter Temperatur arbeiten - nachträgliches Sintern/pyrolytische Aufbringung - stattfinden.

## Zeichnungsbeschreibung

Das Wesen der Erfindung ist nachstehend anhand von in der Zeichnung schematisch dargestellten Ausführungsbeispielen näher erläutert.

Es zeigen:

Fig. 1 a bis e:
Eine Befestigungsvorrichtung für die Anbringung am Oberkiefer aus unterschiedlichen Perspektiven.

Fig. 2 a bis c:
Eine Befestigungsvorrichtung für die Anbringung am Unterkiefer aus unterschiedlichen Perspektiven.

Fig. 3:
Eine Führungsvorrichtung.

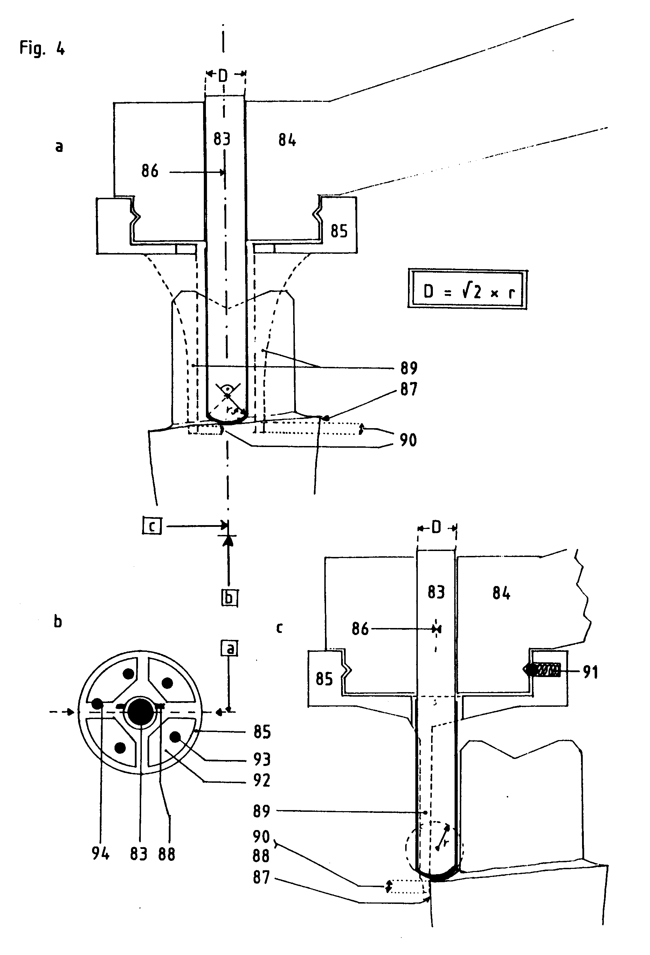

Fig. 4 a bis c:
Einen Distanzhalter in Schnittdarstellungen.

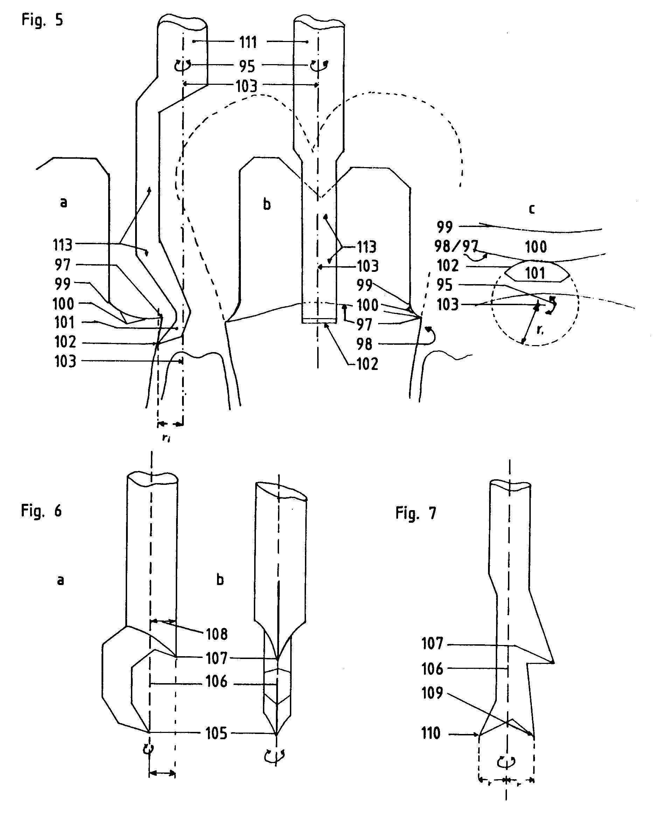

Fig. 5 a bis c:
Ein Abtastinstrument am Beispiel einer Kronenversorgung aus unterschiedlichen Perspektiven.

Fig. 6 a und b:
Ein Abtastinstrument für eine Inlayversorgung in Seiten- und Vorderansicht.

Fig. 7:
Ein weiteres Abtastinstrument für eine Inlayversorgung in Seitenansicht.

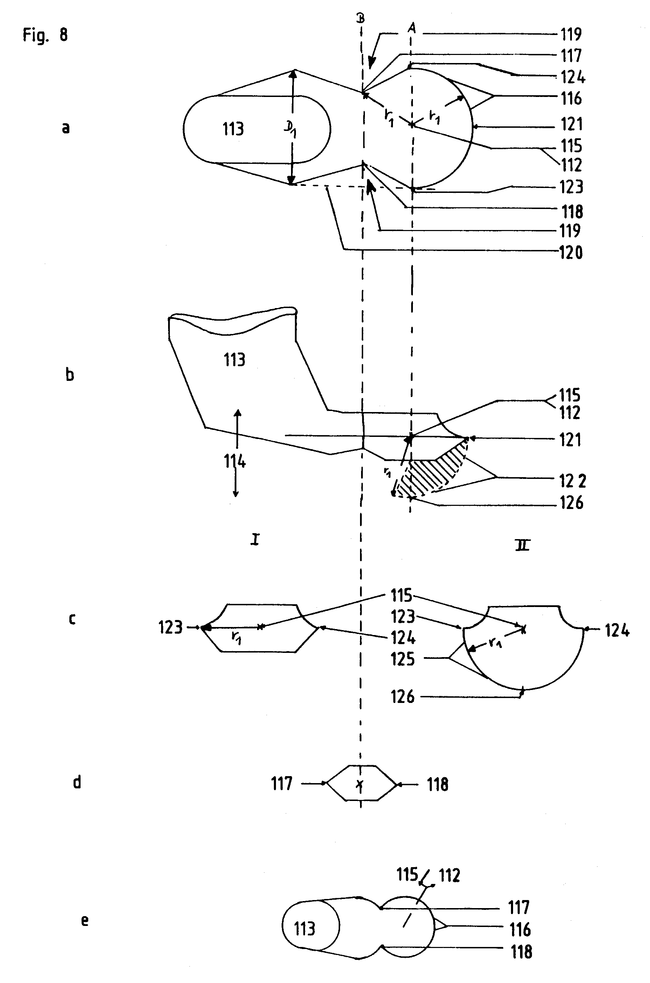

Fig. 8 a bis e:
Ein weiteres Abtastinstrument für eine Inlay- oder Kronenversorgung in verschiedenen Darstellungen.

Fig. 9:
Einen präparierten Unterkieferzahn zur Aufnahme einer 3/4-Krone in perspektivischer Darstellung mit räumlicher Beziehung zu verschiedenen Schleif- und Abtastinstrumenten und einem Anteil einer Zahnfixierungsvorrichtung.

Fig. 10:
Präparierte Oberkieferzähne zur Aufnahme von zwei vollkeramischen Inlays in Aufsicht mit räumlicher Beziehung zu verschiedenen Schleif- und Abtastinstrumenten und einem Anteil einer Zahnfixierungsvorrichtung.

Fig. 11:
Drei spezielle Schleifkörper in Querschnittdarstellung.

Fig. 12:
Einen mit einer Krone versorgten Zahn im Querschnitt und graphischer Zuordnung der Sanierungsspaltdicke.

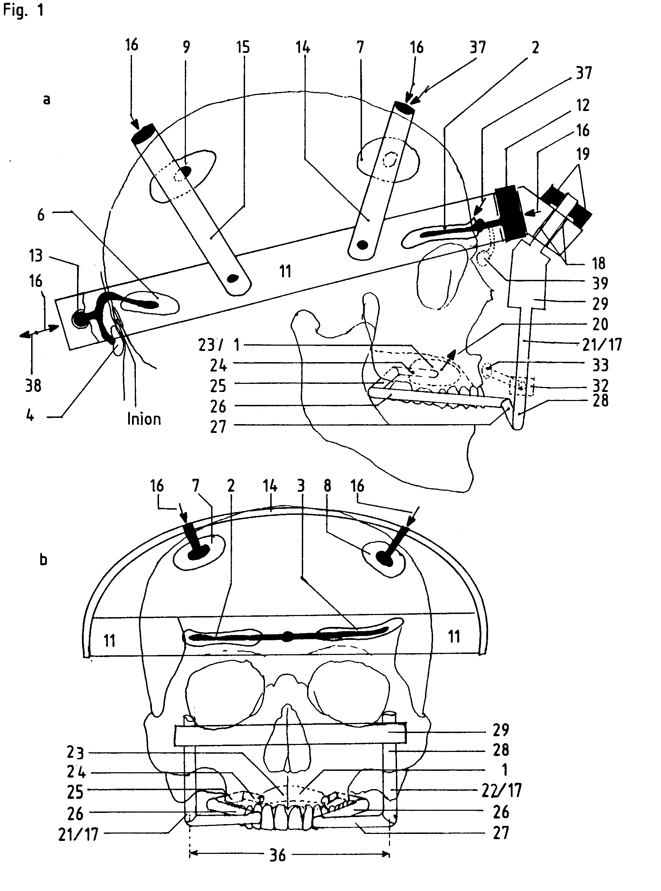

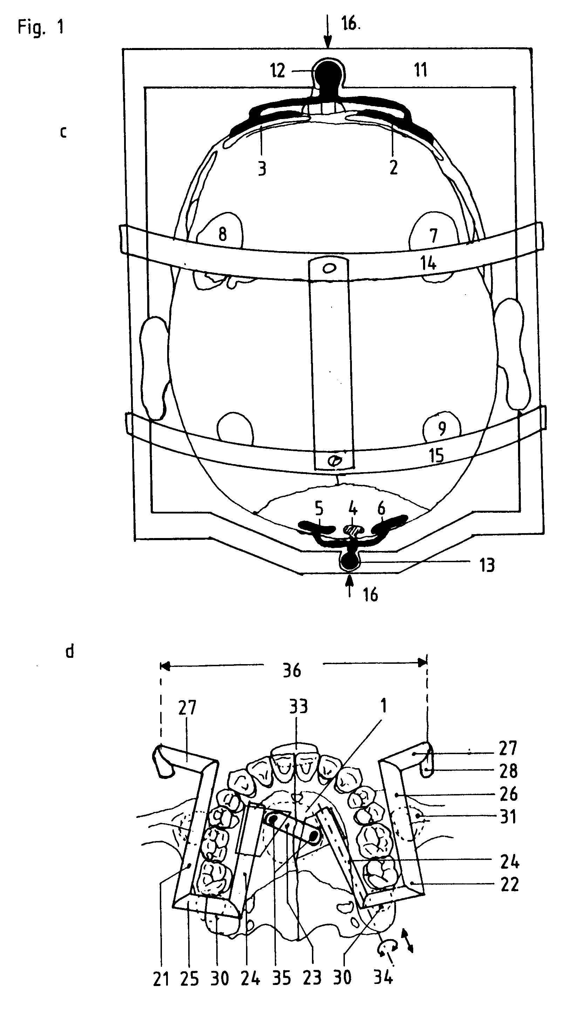

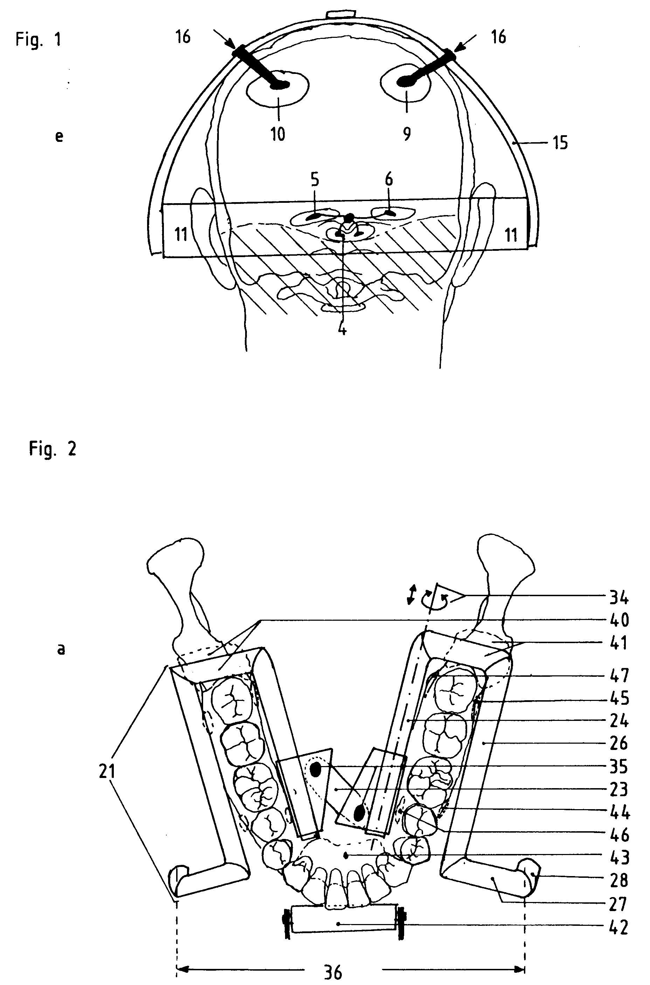

Die in Figur 1 dargestellte Befestigungsvorrichtung für Arbeiten im maxillären Gebißanteil weist Auflagepunkte im Bereich des harten Gaumens (1), oberhalb des Arcus superciliaris (2),(3), unterhalb der Protuberantia occipitalis externa [Inion] (4), zwischen der Linea nunchae superior und suprema (5),(6), und des seitlichen oberen Schädels (7),(8),-(9) und (10) auf. Die extraoarlen Auflagepunkte (2) bis (10) stehen mit einem Kopfrahmen (11) scharnier-(12), kugelgelenkartig (13) oder über einen Trägerbogen (14),(15), der vom Kopfrahmen ausgeht, in Verbindung. Die Auflagepunkte des oberen seitlichen Schädels (7) bis (10) sind am Bogen ebenfalls gelenkig angebracht (nicht gezeichnet), so daß eine Ausrichtung bei ihrer Verspannung gewährleistet ist. Die gelenkigen Verbindungen weisen auch eine Arretiermöglichkeit auf, um eine Stabilisierung der verspannten Befestigungsvorrichtung zu begünstigen (nicht gezeichnet). Ein weiteres der Übersichtlichkeit wegen nicht gezeichnetes Detail besteht in der jeweiligen Verspannungsmöglichkeit der Auflagepunkte (7) bis (10), der zusammengefaßten Auflagepunkte (4),(5),-(6) und (2),(3). Der jeweilige Spannkraftvektor (16) verläuft dabei parallel zur Verbindungslinie der Gelenkverbindung und der (des) Auflagepunkte(s). Der somit aus mehreren miteinander verspannbaren Gestellen zusammengefaßte Kopfrahmen ist als ein Gestell betrachtet mit dem intraoralen Gestell (17) über ein Geschiebe (18) per Schraubwirkung (19) verspannbar, wobei der Spannkraftvektor (20) parallel zur Geschiebeachse verläuft (nur in Figur 1 a gezeichnet).

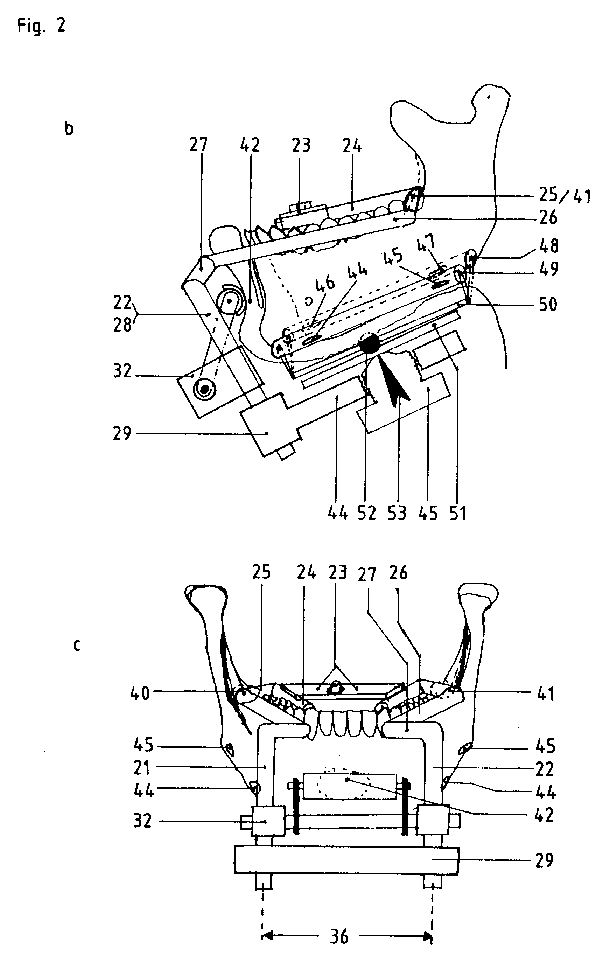

Das den Auflagepunkt (1) am harten Gaumen tragende intraorale Gestell (17) gleicht grundsätzlich dem in Figur 2 dargestellten Gestell. Beide setzen sich aus zwei speziell gewinkelten Stäben (21),(22) aus starrem Material mit spiegelbildlicher Anordnung zusammen. Palatinal bzw. lingual ist das intraorale Ende eines jeweiligen Stabes mit seinem Agonisten im Bereich des Auflagepunktes am harten Gaumen (1) bzw. an den lingualen Flächen der Frontzähne und ihres Alveolarkamms (43) fest verbunden (23), gelangt (24) unter Einhaltung eines Mindestabstandes von den zugewandten Zahnflächen stumpf- bis rechtwinklig innerhalb einer annährend parallel zur Okklusionsebene ausgrichteten Ebene in den Tuber- bzw. Trigonumbereich distal der endständigen Zähne (25) und erreicht nach rechtwinkliger Abknickung inerhalb der selben Ebene den Mundvorhof (26), welchen er mit parallelem Verlauf zu den bukkalen Zahnflächen in der Gegend des Mundwinkels verläßt. Hier gelangt er nach spitz- bis rechtwinkliger Abbiegung nach lateral (27) um kurz danach im rechten bis spitzen Winkel die besagte Ebene nach kranial bzw. kaudal zu verlassen (28) und an einer zweiten Verbindungsstelle (29) zu enden.

Liegen im Bereich der intraoralen Verbindungsstelle (23) keine Abstützpunkte vor, wie beispilesweise bei Nutzung alternativer Abstützkombination - dentale Abstützung; Einsatz von Dornen im Trigonabereich; Auflage im Bereich der Tuber (30) oder der Crista infrazygomatica (31) - kann diese weggelassen werden, wobei zur Vermeidung übermäßiger elastischer Verformungen die Verbindungsstelle und Material entsprechend verstärkt werden. Eine zusätzliche Stabilisierung des intraoralen Gestells wird als Nebeneffekt durch die Anbringung einer weiteren extraoralen Verbindungsstelle (32) zum Tragen von Auflagepunkten im Bereich der ventrokranialen Kinnpartie (42) oder der vestibulären Flächen der oberen Frontzähne oder ihres Alveolarknochens (33) erreicht. Aus Gründen der einfacheren Anpassung der Befestigungsvorrichtung an die anatomischen Gegebenheiten ist es vorzuziehen, die beiden Verbindungsstellen (29),(32) nicht zusammenzufassen.

Die Applikation der gezeigten Befestigungsvorrichtung kann folgendermaßen durchgeführt werden:

Das intraorale Gestell wird an einem vorab gefertigten Modell oder direkt am Patienten unter Auslassung der extraoralen Verbindungsstellen (29),(32) über die Verstellmöglichkeiten an der intraoralen Verbindungsstelle (23) - Rotation und Verschiebung um die Längsachse (34) des gefaßten Stabanteils (24) und Parallelverschiebung der gewinkelten Stäbe durch Ratation in den Schaniergelenken (35) - der Patientensituation angepaßt. Für extreme Abweichungen von den Durchschnittswerten bzw. für unterschiedliche Abstützkombinationen genügt ein vergleichsweise kleines Sortiment von gewinkelten Stäben (21/22) und gegebenenfalls intraoralen Verbindungsstücken (23). Weiterhin ist eine Rotation an den Stabbefestigungen (34) nur selten notwendig, so daß die genannten Ebenen des Stabverlaufs zueinander und zur Kauebene meist parallel verlaufen.

Nach dem Anpassen am Patienten und Arretierung wird die extraorale Verbindung auf die vorliegende Stabentfernung (36) eingestellt und befestigt.

Der Kopfrahmen (11) mit Trägerbögen (14/15) wird am Patientenkopf angepaßt. Hierauf erfolgt die ein- oder zweizeitige und/oder -phasige Applikation der chemo- oder thermoplastischen Materialien zur individuellen Anpassung im Bereich der Auflagepunkte mit anschließender Verspannung der Gestellanteile des Kopfrahmens noch während oder nach der Abbindung. Das extraorale Gestell ist damit appliziert.

Die individuelle Anpassung im Bereich des harten Gaumens (1) wird bei über das Versannungsgeschiebe (18) verbundenen Gestellen durchgeführt. Es folgt die Verspannung mittels Schraubwirkung (19).

Die Ausstattungen

- zur Verstellbarkeit der Verbindungsvorrichtung (29),(32), wie auch die des Kopfrahmen (11) und der Trägerbögen (14),(15),
- zur individuellen Anpassung im Bereich der Auflagepunkte mittels chemo- oder thermoplastischer Materialien,
- zur Verspannung innerhalb des Kopfrahmens und Trägerbögen sind nicht dargestellt.

Es soll an dieser Stelle nochmals auf die Wirkungseffekte bei der Verspannung der Gestelle eingegangen werden.

Durch Kraftbeaufschlagung an der Schraubverbindung des Verspannungsgeschiebes kommt es durch den Kraftvektor (20) zu einer vektoriellen Kraftwirkung (37), deren Widerlager insbesondere durch den Wulst des Arcus superciliaris und die Auflagepunkte (7) und (8) gebildet werden. Gleichzeitig besteht die Gefahr, daß durch weiteres Einsinken der vorderen Auflagepunkte (2),(3),(7),(8) eine Verminderung (38) des Kraftvektors (16) im Bereich der zusammengefaßten Punkte (4),(5),(6) eintritt. Dies erfordert ein Nachspannen an dieser Stelle und macht deutlich, daß die dargestellte Befestigungsvorrichtung neben der zu berücksichtigenden Nachgiebigkeit der Gewebe auch aus anderen Gründen ein abwechselndes Nachspannen an den Auflagepunkten erfordert.

Die Auflagepunkte am seitlichen oberen Schädel besonders die Punkte (9) und (10) fungieren zusätzlich als Stabilisatorn gegen transversalgerichtete Krafte.

Nach funktionellen Gesichtspunkten läßt sich die gezeigte Befestigungsvorrichtung auch anders gliedern, indem die Auflagepunkte (1),(4),(5) und (6) in einem unteren Gestell und die Punkte (2),(3),(7),(8),(9),(10) in einem oberen Gestell angeordnet sind und die Gestellverspannung gemäß der Wirkungseffekte bei der Anbringung im Unterkiefer nachzuvollziehen sind.

Ein weiterer alternativer oder zusätzlicher Auflagepunkt liegt im Bereich der Nasenwurzel (39). Nachteilig ist dabei jedoch, eine höhere Druckempfindlichkeit in dieser Region und ein geringerer Abstand zwischen den Äquivalentpunkten von (2) und (3).

Wird dieser Punkt zusätzlich gewählt, ist es zweckmäßig, die Gelenkverbindung (12) ebenfalls als Kugelgelenk zu gestalten (n.g.).

Die schraffierte Fläche in Figur 1 e markiert den muskulär stark unterlegten Bereich, der für Auflagepunkte weniger geeignet ist.

Die in Figur 2 dargestellte Befestigungsvorrichtung für Arbeiten im mandibulären Gebißanteil weist an ihrem intraoralen Gestell Auflagepunkte im Bereich der Trigona retromolaria (40),(41) der ventrokranialen Kinnpartie (42) und der lingualen Fläche (43) der unteren Frontzähne und deren Alveolarknochens auf.

An der extraoralen Verbindungsstelle (29) der gewinkelten Stäbe (21),(22) ist eine Platte (44) mit annähernd parallelem Verlauf zur Ebene der Auflagepunkte (40),(41),(42),(43) angebracht, die eine Spannvorrichtung (45) in Art einer Schraube mit Rotationszentrum (53) im Bereich des auf die Platte projizierten Flächenzentrums der genannten Auflagepunkte aufweist.

Das extraorale Gestell weist je vier Auflagepunkte im Bereich des linken und rechten kaudalen Unterkiefer-Körperrandes auf. Dabei sind auf einer Seite (nur die linke Seite ist in 2 b dargestellt) je zwei Auflagepunkte auf der lateralen (44),(45) und medialen (46),(47) Fläche des Unterkieferknochens vorhanden. Diese Auflagepunkte werden auf jeder Seite durch zwei parallel zueinander angeordnete und parallel zum Unterkieferrand ausgerichtete, diesem medial (48) und lateral (49) anliegenden Stäben realisiert, die miteinander gelenkig (50) verbunden und an einer Trägerplatte (51) über ein Kugelgelenk (52) oder zwei Scharniergelenke befestigt sind.

Die Trägerplatte (51) steht mit der Spannvorrichtung (45) in Kontakt und ermöglicht die Verspannung der Gestelle über einen Punkt (53) der Kraftübertragung.

Die Applikation der Vorrichtung findet im übertragenden Sinne wie oben beschrieben statt, wobei hier jedoch nur zwei Gestelle vorliegen die über einen Punkt (53) mit einander verspannt werden können.

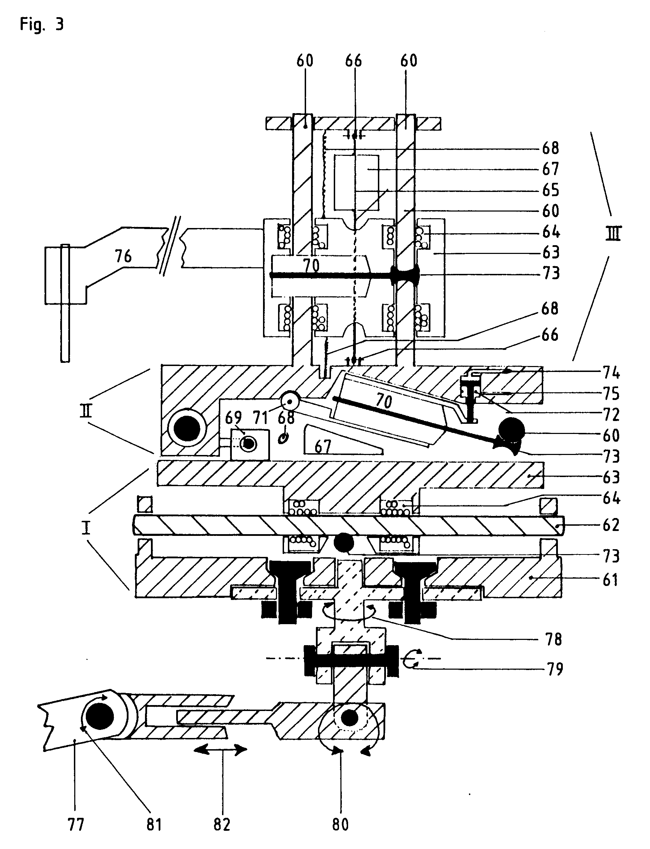

In Figur 3 ist eine Führungsvorrichtung in Art eines Drei-Achs-Geschiebes mit jeweils senkrecht zueinander ausgerichteten Bewegungsachsen dargestellt. Die Führungsgeschiebe I, II, III sind übereinander angeordnet und setzen sich jeweils aus zwei an dem tragenden Schlitten befestigten (60) bzw. an der Grundplatte (61) befestigten Führungsschienen (62 nur einseitig dargestellt), die den Führungsschlitten (63) kugelgelagert in Form von Kugelbüchsen (64) beweglich tragen, zusammen. Zur Ausschaltung gravitationsbedingter Kräfte ist ein Schlitten über Seilzug (65) und Umlenkrollen (66) mit einem Gegengewicht (67) verbunden, wobei deren Massen nahezu gleich sind. Somit ist die Masse des Gegengewichtes des Führungsgeschiebes II größer als das des Führungsgeschiebes III, da ersteres letzteres trägt.

Weiterhin wird ein Schlitten über Federn (68) zentriert.

Lineare Wegaufnehmer (69) sind parallel zur Schlittenbewegungsachse ausgerichtet. Zur Minimierung von Meßfehlern und zum Schutz der empfindlichen Wegaufnehmer, kann es besonders vorteilhaft sein, die Detektoreinheit innerhalb des Lumens einer rohrartig gestalteten Führungsschiene unterzubringen (nicht gezeichnet).

Die Führungsschlitten weisen je einen Schrittmotor (70) auf, der sich über seine Aufhängung an einem Schaniergelenk (71) und einer pneumatischen Hubvorrichtung (72) mit der jeweiligen Führungsschiene (60/62) in mechanischen Kontakt bringen läßt.

In der Zeichnung liegt dieser mechanische Kontakt durch Anlagerung der kongruent geformten Walze (73) am Ende der Motorachse an der Führungsschiene vor. Die Hubvorrichtung (72) wird über Druckluftanschlüsse (74),(75) durch Zu- und Abführung von Druckluft elektronisch gesteuert und ist auch per Fußpedal auslösbar (nicht gezeichnet).

Die Schritt- oder Induktionsmotoren können einerseits als Bewegungsvorrichtungen für die maschinelle Präparation dienen, wobei ein ständiger mechanischer Kontakt vorliegt (73),(60) und andererseits als Arretiervorrichtung bei der halbindividuellen Präparation, indem per Fußschalter der Schlitten durch den Behandler arretiert werden kann, oder aber beispielsweise bei der Fräsung einer vorgegebenen Knochenkavität, indem ein Schlitten bei Überschreitung der geplanten Kavitätengrenze rechnergesteuert gestoppt wird, fungieren. Im letzteren Fall kann die sichere Arretierung durch zusätzliche mechanische Blockierung der Motorachse erhöht werden. Aus platzgründen sind die Motoren in den Führungsgeschieben I und II schräg angeordnet. Geschiebe III weist dagegen einen eher parallel zur Schlittenebene ausgerichteten Motor auf.

Weitere Ausstattungen wie Drucksensoren, Behandlergriff, Anschlußverbindungen, Gelenke zur relativen Positionsänderung zwischen Führungsvorrichtung und Funktionselement (76), etc sind nicht dargestellt.

Die Grundplatte (61) ist über mehrere Gelenke mit dem schwenkbaren (n.g.) Ausleger (77) der Befestigungsvorrichtung verbunden, die die Grundpositionierung der Führungsvorrichtung bzw. des Funktionselementes (76) ermöglichen. Die durchführbaren Bewegungen der Führungsvorrichtung bestehen dabei in einer Schwenkung im Bereich der Befestigungsvorrichtung (n.g.) und der durch die Pfeile (78) bis (81) gekennzeichneten Rotationen und der Verschiebung (82).

Der in Figur 4 dargestellte Distanzhalter zur Erlangung einer rundum gleichstarken Präparationstiefe im Bereich der Sanierungsgrenze (82) zeigt das mit einem 1/4-Kugelkopf-Schleifkörper (83) bestückte Funktionselement (84) bei einer Zahnpräparation zur Aufnahme einer vollkeramischen Krone.

Das aufsteckbare Distanzhaltergestell (85) ist gegen das Funktionselement (84) um die Schleifkörperachse (86) frei rotierbar und besteht aus einem relativ starren Material. Zur einfacheren Anbringung kann ein Snapverschluß (91) dienen. Die zur Anlagerung an die unbeschliffene Zahnfläche (87) vorgesehenen Enden (88) der Distanzhalterarme (89) überragen die Schleifkörperspitze um einen Mindestbetrag (90).

Um eine effektive Wasserkühlung während des Schleifvorganges gewährleisten zu können, weist das Distanzhaltergestell (85) vier symmetrisch angeordnete Durchlaßöffnungen (92) bei im Fünfeck angeordneten Spraydüsen (93) auf, so daß bei jeder beliebigen Position maximal eine Spraydüse verdeckt (94) ist.

Die Gestalt des 1/4-Kugelkopf-Schleifkörpers (83) ist in Figur 4 c geometrisch definiert, wobei [$D^2 = 2\,r^2$].

Figur 5 zeigt ein durch den Behandler drehbares (95) Abtastinstrument, das durch seine platzsparende Anordnung auch bei minimalem Platzangebot (Approximaler Extensionsabstand) eine abtastende Erfassung der an den Sanierungsrand (97) grenzenden unbeschliffenen Flächen (98) ermöglicht und sich in besonderer Weise für die Abtastung von Kronenpräparationen eignet.

Figur a zeigt das Instrument in Seitendarstellung, Figur b in Rückansicht und Figur c das Instrumentenende (101) in Aufsicht.

Da die Abtastkante (102) einem Kreisbogensegment mit festgelegten Radius ($r_1$) von der Rotationsachse (103) ausgehend darstellt, kann es beliebig gedreht werden, ohne dem Rechner diese Änderungen eingeben zu müssen. Auf diese Weise können alle erforderlichen Flächen einfach und sicher erfaßt werden. Die Rotation des Abtastinstrumentes kann beispielsweise durch Rotation des Behandlergriffes um seine Achse oder ein an diesem angebrachten Verstellrädchen dem Behandler zugänglich gemacht werden.

Die Abtastkante (102) kann weiterhin eine gewisse abscharbende Funktion im Sinne eines Scalers aufweisen (s.o.).

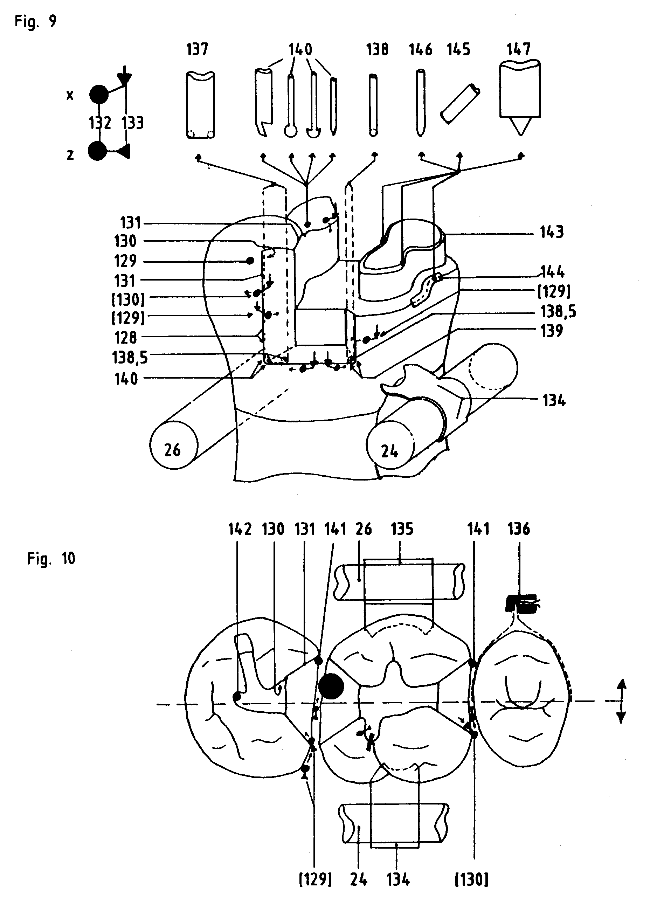

Figur 6 zeigt ein für Einlagefüllungen besonders geeignetes Instrument mit spitzem im Rotationszentrum (106) gelegenem Instrumentenende (105), insbesondere zur Abtasung der Kauflächenanteile im Sanierungsrandbereich (siehe auch Figur 9). Dabei fungiert eine zweite exentrische Spitze (107) als "Kontrolltaster" durch den Kontakt mit der ungeschliffenen Kaufläche oder mit dem Federand in bekanntem Abstand (108) von der zum selben Zeitpunkt die Kavitätenwand abtastenden zentrischen Spitze (105).

In Figur 7 liegen die Instrumentenspitzen (109)-,(110) dagegen auf dem Radius (r) um die Rotationsachse (106).

Figur 8 zeigt ein universelles, drehbares Abtastinstrument, das bei nahezu allen Präparationsformen einsetzbar ist und sich deswegen für die Abtastung von 3/4-Kronenpräparationen besonders eignet.

Wie bei dem in Figur 5 a dargestellte Kronenabtaster befindet sich auch hier der Instrumentenschaft (111 in Fig. 8 n.g.) im Rotationszentrum (112/103), gelangt dann in eine exentrische Lage (113), um unmittelbar vor dem Instrumentenende (114/101) wieder das Rotationszentrum (112/103) zu erreichen. Weiterhin sind auch hier alle für die Abtastung vorgesehenen Punkte, Flächen oder Kanten ausschließlich auf einer Kugeloberfläche mit festgelegtem Radius ($r_1$) vom Zentralpunkt (115) der gleichzeitig das Rotationszentrum (112) enthält, lokalisiert.

Die zur Abtastung vorgesehenen Punkte befinden sich:

- in Figur a:    auf dem Halbkreis (116) rechts der gestrichelten Linie (A) und die beiden auf der Linie (B) liegenden Punkte (117),(118), die die beiden stumpfwinkligen Kerben (119) bilden,
- in Figur b:    am Punkt der gleichzeitig auf dem Kreisbogen (116) liegt und auf dem gestricheltem Kreisbogen (122), der die Schnittdarstellung der in Figur C II aufgeführten Varriante darstellt,
- in Figur c I    :an den Punkten (123),(124)
- in Figur c II    :zusätzlich auf dem Kreisbogen (125) , wobei Punkt (126) auf der Rotationsachse liegt.
- in Figur d:    (117), (118),
- in Figur e:    auf dem Kreisbogen (116) rechts der Linie B, einschließlich der Punkte (117) und (118), die den tiefsten Punkt der Kerbe einehmen.

Die Figur e stellt eine alternative Formvariante der Kerbenbildung dar.

Die durch die Linie (116) dargestellte Abtastkante (Varriante c I) ermöglicht die Abtastung eher parallel zur (Zahn-) Instrumentenachse gelegener Flächen. Wird die Abtastlinie gemäß der Varriante c 11 auf eine Kugelfläche (116), (122) und (125) erweitert, können auch eher quer zur Zahnachse gelegene Flächen, d.h. die Kauflächen oder Stirnflächen getastet werden.

Die, die Kerben (119) definierenden Abtastpunkte (117) und (118) ermöglichen auch die Abtastung der approximal gelegenen, gekrümmt vertikal verlaufenden Präparationgrenze (128), ohne

eine Schwenkung des Instrumentes aus der Rotationsachse notwendig zu machen (siehe auch Figur 9, 145).

Eine geeignete Vorgehensweise besteht darin, daß der Behandler das Tastinstrument von der unbeschliffenen (129) oder beschliffenen (130) Zahnfläche her zur Präparationsgrenze (131) führt bis der Punkt (124/123) an ihr ruckartig abgleitet und dann beim Erreichen des Kerbenpunktes (117/118) wiederum ruckartig zum Stehen kommt. Beides ist durch den Behandler fühlbar, der dann die in der Kerbe liegende Zahnkante vertikal abtastet. Ein kontrollierendes erneutes Ansetzen ist zweckmäßig. In den Figuren 9 und 10 ist dieser Vorgang durch eckige Klammern und angegebener Bewegungsrichtung gekennzeichnet [129],[130]. Durch die mit (120) bezifferte, gestrichelte Linie verhindert Meßfehler, weil $D_1 = 2r_1$.

In den Figuren 9 und 10 ist dieses universelle Abtastinstrument durch einen gefüllten Kreis (132), der den Zentralpunkt (115) enthält und einen pfeilförmigen Schwanz (133), der den exentrisch gelagerten Schaftanteil (113) entspricht, symbolisiert.

Die Figur 9 zeigt die Beziehung einiger Abtast- und Schleifinstrumente zu einem perspektivisch dargestellten präparierten Zahn zur Aufnahme einer 3/4-Krone und die Figur 10 zu zwei in Aufsicht dargestellten präparierten Zähnen zur Aufnahme je einer Einlagefüllung. Zur Unterbindung der physiologischen Zahnbeweglichkeit wird ein zu präparierender Zahn mittels an den intraoralen Gestellanteilen (24),(26) angeordneten Zahn-Fixierungs-Vorrichtung (134),(135) (grob schematisch ohne Spannvorrichtung) stabilisiert. Auch aus der Füllungstherapie bekannte interdentale Zahnkeilchen können eine Zahnfixierung gewährleisten bzw. unterstützen.

Eine in der Zahnheilkunde gebräuchliche Matritze (136) verhindert etwaiges Anschleifen von Nachbarzähnen.

Ein abgerundeter zylindrischer Schleifkkörper (137) eignet sich in besonderer Weise zur Präparation von Einlagefüllungen bzw. 3/4-Kronen, wenn die Abrundung geometrisch (Kreise-138,5) definiert ist und auf diese Weise verschiedene Schleifkörpergrößen eingesetzt werden können, ohne Abweichungen in der Randgestaltung (139),(140) aufkommen zu lassen. Das kleinste noch verwendbare Instrument, das sich mit dem Zylinder (137) kombinieren läßt, stellt ein 1/2-Kugelkopf-Schleifkörper mit demselben Radius der genannten Kreise (138,5) dar. Dieser Minimalbohrer eingnet sich insbesondere für die approximale Separation (141) und Minimal-Präparation (142).

Abschrägungen in Form von Entgratungen (143) oder Federrandpräparationen (144) lassen sich einerseits durch Instrumentenschwenkung (145) und andererseits durch entsprechende Instrumentenform wie z.B. Hohlkehle (146) oder Spezialschleifkörper (147) (siehe auch Fig. 11) realisieren.

Weitere Abtastinstrumente zeigt (140) die sich durch Schwenkung auch im Approximalraum einsetzen lassen.

Figur 11 zeigt spezielle Schleifkörper zur vereinfachten Stufenpräparation mit verschiedenen Anschrägungen. Die gestrichelten Linien (141) geben den diamantierten und substanzabtragenden Bereich an.

Figur 12 zeigt einen mit einer Krone (145) versorgten Zahn mit linksseitiger 1/4-Kugelkopf- und rechtsseitiger Hohlkehl-Präparation. Der Verlauf der Sanierungsspaltdicke ist in Abhängigkeit der Entfernung vom Sanierungsrand dargestellt. Der Pfeil (142) gibt das erreichbare Minimum des Randspaltes an, der den Betrag von 50 $\mu$m beträchtlich unterschreiten sollte und ab ca. 30 $\mu$m günstig ist.

Um bei einer definitiven Versorgung eine Luftentweichung und einen Abfluß des überschüssigen Zementes gewährleisten zu können, ist in der Okklusalfläche eine definierte Bohrung (143) die nach dem Zementieren, vorzugsweise noch vor der Abbindung mit einem entsprechenden vorgefertigten Stift (144) verschlossen wird.

Zur einfacheren Gewinnung der Funktions- und Maximalkaufläche wird nach Abschluß der Präparation in der Fräsmaschine ein Kunststoffprovisorium (145) mit den schon zumindest grob ermittelten und konstruierten Werten der Außenkontur hergestellt. Im Bereich der Kaufläche wird ein unter sich gehender Kasten (146) präpariert, dessen Rand (147) überdimensioniert bleibt und unter in vivo Bedingungen grob eingeschliffen (148) wird, bis mit Sicherheit keine Artikulationsbehinderung mehr vorliegt. Nun wird das chemo- oder thermoplastische Material (149) appliziert und gegebenenfalls nach Isolierung seiner Oberfläche oder nach Applikation einer Isolierfolie (150) werden die genannten Kauflächen ermittelt und abgetastet. Die retentive Kastenform verhindert ein Auslösen des noch plastischen Materials insbesondere bei den Seitwärtsbewegungen. Das gefräste Provisorium wird im Randbereich geprüft. Etwaige Abweichungen werden bei Herstellung der Restauration berücksichtigt.

**Patentansprüche**

1. Apparatur zur Führung eines substanzabtragenden und/oder substanzaufbringenden zahnärztlichen Instrumentes und/oder zumindest eines Anteiles eines Meßgerätes zur geometrischen Form- und/oder Wegerfassung, bestehend aus:

- einer Befestigungsvorrichtung für die Anbringung am menschlichen Körper,
- dem zu führenden, durch den Behandler bewegbaren Funktionselement
- und einer Führungsvorrichtung, die beide verbindet, deren Bewegung gegeneinander ermöglicht und gleichzeitig in festgelegten Freiheitsgraden einschränkt,

dadurch gekennzeichnet,

daß die Befestigungsvorrichtung zur Anbringung am maxillären oder am mandibulären Gebißanteil aus mindestens zwei miteinander verspannbaren Gestellen besteht, die insgesamt mindestens vier, vorzugsweise jedoch nicht weniger als sechs räumlich voneinander getrennte Auflagepunkte am menschlichen Körper aufweisen und daß der Hauptspannkraftvektor vorzugsweise eher senkrecht zur Okklusionsebene verläuft.

2. Apparatur nach Anspruch 1,
   dadurch gekennzeichnet,
   daß die Gestelle Auflagepunkte am menschlichen Körper aufweisen, die:
   - zur Anbringung im mandibulären Gebißanteil
     - mit vorzugsweise parallel zum Spannkraftrichtungsvektor ausgerichteter Kraftwirkung (Abstützpunkt) im Bereich des zahnfreien Alveolarkamms, der Trigona retromolaria, der ventrokranialen Kinnpartie, der nach kraniolateral weisenden Flächen des Unterkieferkörpers und/oder des kaudalen Unterkieferrandes und/oder auf den Zähnen des Unterkiefers lokalisiert sind
     - und/oder mit vorzugsweise senkrecht zum Spannkraftrichtungsvektor ausgerichteter Kraftwirkung (Fixierpunkt) im Bereich der lingualen Flächen der Unterkieferfrontzähne und/oder ihres Alveolarfortsatzes, an den freien Approximalflächen lückenbegrenzender und/oder endständiger Zähne und/oder am dorsalen Rand des aufsteigenden Unterkieferastes im Bereich des Unterkieferwinkels lokalisiert sind;
   - zur Anbringung im maxillären Gebißanteil
     - mit vorzugsweise parallel zum Spannkraftrichtungsvektor ausgerichteter Kraftwirkung (Abstützpunkt) im Bereich des Alveolarkamms, der Tubera, der kaudalgeneigten Flächen in der Region des Processus zygomaticus (maxillae), des harten Gaumens, der Zähne des Oberkiefers, der Schädelkalotte, der knöchernen Nasenwurzel, der Stirn, der Stirnfortsätze, der Superciliarfortsätze und/oder des Hinterhauptes (Occipit);
     - mit vorzugsweise senkrecht zum Spannkraftrichtungsvektor ausgerichteter Kraftwirkung (Fixierpunkt) im Bereich der vestibulären Flächen der Oberkieferfrontzähne und/oder ihres Alveolarfortsatzes, der vorderen/seitlichen Stirn, des hinteren/seitlichen Hinterhauptes> des Warzenfortsatzes und/oder an den freien Approximalflächen lückenbegrenzender und/oder endständiger Zähne lokalisiert sind.

3. Apparatur nach Anspruch 1,
   dadurch gekennzeichnet,
   daß die Befestigungsvorrichtung für die Anbringung am mandibulären Gebißanteil
   ein Gestell aufweist:
   - mit mindestens einem Auflagepunkt im Bereich des rechten und linken Trigonum retromolare bzw. des angrenzenden Alveolarkamms, einem Auflagepunkt im Bereich der ventrokraniellen Kinnpartie und mindestens einem Auflagepunkt im Bereich der lingualen Flächen der Unterkieferfrontzähne und/oder ihres Alveolarknochens, oder
   - mit mindestens einem Auflagepunkt im Bereich des rechten und linken Trigonum retromolare bzw. des angrenzenden Alveolarkammabschnittes und einem Auflagepunkt im Bereich der ventrokraniellen Kinnpartie mit intraoralem, oder extraoralem Zugang,oder
   - mit mindestens drei vorzugsweise vier Auflagepunkten auf den Zähnen mit möglichst großen Abständen voneinander, oder
   - mit mindestens vier Auflagepunkten auf den Zähnen mit möglichst großen Abständen voneinander unter Freilassung der Frontzähne, oder
   - mit mindestens vier Auflagepunkten auf den Zähnen und/oder im Bereich des zahnlosen Alveolarkamms mit möglichst großen Abständen voneinander
   und ein zweites Gestell aufweist
   mit mindestens drei (sechs), vorzugsweise nicht weniger als vier (acht) Auflagepunkten im Bereich des kaudalen Unterkieferkörperrandes aufweist.

und für die Anbringung am maxillären Gebißanteil
ein Gestell aufweist:

- mit mindestens einem Auflagepunkt im Bereich des rechten und linken Tuber maxillae bzw. des angrenzenden Alveo-larkammbereichs, und einem Auflage-punkt im Bereich des harten Gaumen, oder

- mit mindestens einem Auflagepunkt im Bereich des rechten und linken Tuber maxillae bzw. des angrenzenden Alveo-larkammbereichs, und einem Auflage-punkt im Bereich der vestibulären Flächen der Oberkieferfrontzähne und/oder ihres Alveolarknochens,oder

- mit mindestens einem Auflagepunkt im Bereich des harten Gaumens und/oder einem Auflagepunkt im Bereich der vesti-bulären Flächen der Oberkieferfrontzäh-ne und/oder ihres Alveolarknochens, oder

- mit mindestens drei Auflagepunkten auf den Zähnen mit möglichst großen Abständen voneinander, oder

- mit mindestens vier Auflagepunkten auf den Zähnen mit möglichst großen Abständen voneinander unter Freilassung der Frontzähne, oder

- mit mindestens vier Auflagepunkten auf den Zähnen und/oder im Bereich des zahnlosen Alveolarkamms mit möglichst großen Abständen voneinander

und ein zweites Gestell aufweist,mit mindestens einem Auflagepunkt unmittelbar kaudal und zwei kranial der Protuberantia externa des Hinterhauptbeins (Inion), mindestens zwei Auflagepunkten im Bereich des Stirnbeins kranial des Arcus superciliaris und mindestens drei, vorzugsweise nicht weniger als vier Auflagepunkten im Bereich der nach kraniolateral weisenden Flächen der Schädelkalotte und/oder der Stirn.

4. Apparatur nach einem der Ansprüche 1 bis 3, dadurch gekennzeichnet,
daß der intraorale Anteil eines Gestells einer Befestigungsvorrichtung die Mundhöhle beiderseits im Bereich der Mundwinkel bzw. der Eckzähne über das Vestibulum erreicht, dem Zahnbogen mit annährend parallelem Verlauf unter Einhaltung eines Mindestabstands zu den Zähnen von bukkal über distal nach lingual folgt und dabei die Kauebene, beziehungsweise die durch die Artikulation des Gegenkiefers eingenommene gekrümmte Ebene nicht wesentlich) überschreitet.

5. Apparatur nach einem der Ansprüche 1 bis 4, dadurch gekennzeichnet,
daß ein Gestell mit mindestens einer Hubvorrichtung fest verbunden ist, deren beweglicher Teil - nach Anbringung der Befestigungsvorrichtung am menschlichen Körper - sich mit einem zweiten Gestell kraftschlüssig in Kontakt bringen läßt und daß der Summenvektor der Kraftaufbringung durch Schraub-, Klemm- oder Hubwirkung zur Verspannung der Gestelle die Kauebene vorzugsweise eher senkrecht kreuzt.

6. Apparatur nach einem der Ansprüche 1 bis 5, dadurch gekennzeichnet,
daß die Gestelle einer Befestigungsvorrichtung nur einen, zwei oder drei Berührungspunkte miteinander aufweisen oder durch ein spannbares Geschiebe miteinander verbunden sind und hier gleichzeitig der Ort der zur Verspannung notwendigen Kraftübertragung ist.

7. Apparatur nach einem der Ansprüche 1 bis 6, dadurch gekennzeichnet,
daß ein Gestell einer Befestigungsvorrichtung aus mehreren Teilen zusammengesetzt ist und mindestens ein Gelenk zur rotierbaren und/oder verschiebaren Positionsänderung mit oder ohne Arretierbarkeit vorzugsweise durch Klemm- und/oder Schraubwirkung aufweist.

8. Apparatur nach einem der Ansprüche 1 bis 7, dadurch gekennzeichnet,
daß die intraoralen Gestelleanteile mit Vorkehrungen zur Fixierung eines Objektzahanes, wie zum Beispiel Dornen oder stellbare Stifte ausgestattet sind, die in ihrer Gestalt und Anbringung auch ein subgingivales Greifen ermöglichen.

9. Apparatur nach einem der Ansprüche 1 bis 8, dadurch gekennzeichnet,
daß die Befestigungsvorrichtung an Auflagepunkten mit

- einem Polster aus gummielastischen Material und/oder

- einem verformbaren mit Gas und/oder Flüssigkeit und/oder Festkörperpartikeln gefüllten Hohlkörper mit oder ohne Anschluß an einem Gas und/oder Flüssig-keit und/oder Festkörperpartikel enthal-tenden Behälter mit Vorrichtung zur Druckbeaufschlagung und/oder

- Nadeln oder Dornen und/oder

- mit chemo- oder thermoplastischen Material versehen ist, oder,

- die die Anbringung eines Trägers im Bereich eines Auflagepunktes vorsieht, der Retentionen zur Aufnahme eines gummielastischen, gering elastischen und/oder starren chemo- oder thermoelastischen Materials aufweist.

10. Apparatur nach einem der Ansprüche 1 bis 9, dadurch gekennzeichnet,

daß die Führungsvorrichtung aus drei, jeweils senkrecht zueinander angeordneten linearen Führungsschlitten besteht und der Schlitten mit den meisten Freiheitsgraden der Bewegung relativ zur Befestigungsvorrichtung das Funktionselement trägt, dessen Achsen vorzugsweise parallel beziehungsweise senkrecht zu den Führungsachsen ausgerichtet sind.

11. Apparatur nach einem der Ansprüche 1 bis 10, dadurch gekennzeichnet,

daß die Verbindung der Führungsvorrichtung mit der Befestigungsvorrichtung und/oder die Verbindung des Funktionselementes mit der Führungsvorrichtung stufenlose und/oder stufenförmig arretierbare Gelenke und/oder Geschiebe mit festgelegten Freiheitsgraden der Bewegung aufweist und zur Erfassung der Positionsänderung mit Wegaufnehmern oder digitalen Positionsdetektoren ausgestattet ist.

12. Apparatur nach einem der Ansprüche 1 bis 11, dadurch gekennzeichnet,

daß das Funktionselement für die Aufnahme eines, gemäß eines zahnärztlichen Instrumentes gestalteten Griffes mit gelenkiger Verbindung beispielsweise in Form eines Kugelgelenkes vorgesehen ist.

13. Apparatur nach einem der Ansprüche 1 bis 12, dadurch gekennzeichnet,

daß ein Schlitten einer Führungsvorrichtung

- beidseitig oder einseitig über mit seiner Schiene verbundenen Federn eine Kraftbeaufschlagung erfährt, so daß auch unter Berücksichtigung der Schwerkraft zur Bewegung des Funktionselementes eine gewisse, relativ geringe Kraft aufgebracht werden muß
- je eine Arretiervorrichtung aufweist, die seine Beweglichkeit auf der Schiene verhindert,
- beidseitig seilzugartig mit einem Gegengewicht über Umlenkrollen in Verbindung steht,
- mit einem Wegaufnehmer mit Anschluß an einem Informationsverarbeitungssystem ausgestattet ist.
- eine mechanisch zuschaltbare Bewegungsvorrichtung beispielsweise Schrittmotor mit Anschluß an einem Informationsverarbeitungssystem aufweist.

14. Apparatur nach einem der Ansprüche 1 bis 13, dadurch gekennzeichnet, daß das Funktionselement

- ein motor- und/oder wellenbetriebenes oder luft- oder wasserturbinenbetriebenes Bohr- und Schleifinstrument darstellt oder
- ein motor-, luft-, wasserbetriebenes, piezoelektrisches oder elektromagnetisches Schwingschleifinstrument darstellt oder
- ein mit Sandstrahl- oder Laser betriebenes Substanz antragendes Instrument darstellt oder

15. Apparatur nach einem der Ansprüche 1 bis 14, dadurch gekennzeichnet,

daß ein am Funktionselement angebrachtes Schleif- und Bohrinstrumente oder Abtastinstrument in seiner Form, Größe und Position relativ zu einem festgelegten Fixpunkt an der Führungs- und/oder Befestigungsvorrichtung in einem Informationsverarbeitungssystem gespeichert und verarbeitbar ist.

16. Apparatur nach einem der Ansprüche 1 bis 15, dadurch gekennzeichnet,

daß die Befestigungsvorrichtung für die Anbringung an eine Tragevorrichtung vorgesehen die mit dem Behandlungsstuhl, dem Boden, der Decke oder der Wand des Behandlungszimmers fest verbunden ist und die Gesamtapparatur zumindest unter Beibehaltung einer minimalen Eigenbeweglichkeit beispielsweise durch Ausstattung mit Federn, hydraulischen oder pneumatischen Vorrichtungen oder Leinen, Stangen und Gegengewichten zum Ausgleich der Schwerkraft trägt.

17. Verfahren zur zumindest teilweisen maschinellen Herstellung von konservierenden oder prothetischen Restaurationen, das sich aus einer intraoralen halbindividuellen Präparation und Meßdatenerfassung und nach Datenverarbeitung aus der Restaurationsherstellung mittels rechnergestützten Fräs-Schleifmaschinen zusammensetzt,

wobei die halbindividuelle Präparation darin besteht, daß bei vorzugsweise nur unwesentlich in seiner Bewegungsfreiheit eingeschränktem Patientenkpof und/oder Unterkiefer das substanzabtragende Instrument mit festgelegten Freiheitsgraden der Bewegung durch den Behandler geführt wird und die grungsätzlichen Bewegungen, abgesehen von zuschaltbaren Bewegungsmöglichkeiten vorzugsweise auf eine Parallelverschiebung im Raum beschränkt sind,
dadurch gekennzeichnet,
daß ein zu versorgender Zahn nach dem Verfahren der halbindividuellen Präparation bei gleichzeitiger Bewegungsregistrierung des abtragenden Instrumentes beschliffen wird, zumindest die am Restaurationsrand grenzenden unbeschliffenen Zahnflächen halbindividuell geführt abgetastet oder akustisch oder optisch vermessen werden und die Teil- oder Vollrestauration maschinell einphasig aus Vollmaterial oder mehrphasig aus verbundfest miteinander kombinierten Materialien hergestellt wird.

18. Verfahren nach Anspruch 17,
dadurch gekennzeichnet, daß
- vor dem Abtrag der Zahn abtastend, akustisch oder optisch vermessen wird und/oder
- nach dem Zahnabtrag die für die Restauration komplementär relevanten angrenzenden anatomischen Strukturen abtastend, akustisch oder optisch vermessen werden und/oder
- nach halbindividueller Präparation des Zahnes eine maschinellen Nachpräparation nach den gewonnenen Werten mit einprogrammierten minimalem weiteren Substanzabtrag stattfindet und/oder
- zur Gestaltung der Kauflächen ein Zahnstumpf oder zahnloser Alveolarkammabschnitt kauflächenwärts direkt oder über einen Träger mit einem chem- oder thermoplastischen Material versehen wird, die Schlußbißstellung eingenommen und/oder Artikulationsbewegungen durchgeführt werden und die hierdurch erhaltenen Konturen abtastend, akustisch oder optisch vermessen und einem Rechenprogramm zur Konstruktion der Restaurationskaufläche(n) übermittelt werden und/oder
- die abtragende Bearbeitung eines überdimensionierten Rohlings in der rechnergesteuerten Frässchleifmaschine zumindest in einem Teilschritt, vorzugsweise des Nachschleifens der formgebenden Bearbeitung mittels speziell geformten Schleifkörpern vorgenommen wird, die in ihrer komplementären Form Teilabschnitte der Präparationsfläche aufliegenden Restaurationsflächen entsprechen.

Fig. 1

Fig. 1

Fig. 1

e

16

16

10

9

15

5

6

11

11

4

Fig. 2

a

34
40
41
47
45
24
26
35
23
44
46
43
28
27
42

21

36

Fig. 2

Fig. 3

**Fig. 4**

$$D = \sqrt{2} \times r$$

Fig. 5

Fig. 6

Fig. 7

Fig. 8

Fig. 9

Fig. 10

Fig. 11

141

141

a       b       c

Fig. 12

144
150
149
147
148
146
145

143

Spaltdicke

142